(19) Europäisches Patentamt / European Patent Office / Office européen des brevets

(11) **EP 3 844 475 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **19756209.3**

(22) Anmeldetag: **27.08.2019**

(51) Internationale Patentklassifikation (IPC):
**G01N 1/22** (2006.01)        **G01N 15/14** (2006.01)
**B01D 45/04** (2006.01)

(52) Gemeinsame Patentklassifikation (CPC):
**G01N 1/2208; G01N 1/2211;** B01D 45/04;
B01D 45/12; G01N 15/1459; G01N 2001/002;
G01N 2015/0019; G01N 2015/0046

(86) Internationale Anmeldenummer:
**PCT/EP2019/072764**

(87) Internationale Veröffentlichungsnummer:
**WO 2020/043688 (05.03.2020 Gazette 2020/10)**

(54) **MESSSYSTEM ZUM UNTERSUCHEN VON KONZENTRIERTEN AEROSOLPARTIKELN IN DER GASPHASE**

MEASURING SYSTEM FOR EXAMINING CONCENTRATED AEROSOL PARTICLES IN THE GAS PHASE

SYSTÈME DE MESURE PERMETTANT D'EXAMINER DES PARTICULES D'AÉROSOL CONCENTRÉES DANS LA PHASE GAZEUSE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.08.2018   EP 18191098**

(43) Veröffentlichungstag der Anmeldung:
**07.07.2021   Patentblatt 2021/27**

(73) Patentinhaber: **Swisens AG**
**6032 Emmen (CH)**

(72) Erfinder:
• **ROOS LAUNCHBURY, David**
  **6319 Allenwinden (CH)**
• **WASER, Roger**
  **6373 Ennetbürgen (CH)**
• **NIEDERBERGER, Erny**
  **6006 Luzern (CH)**
• **ABT, Reto**
  **6005 Luzern (CH)**
• **BURCH, Philipp**
  **8200 Schaffhausen (CH)**

(74) Vertreter: **Koelliker, Robert**
**Patentanwalt Koelliker GmbH**
**Bahnhofstrasse 11**
**6210 Sursee (CH)**

(56) Entgegenhaltungen:
EP-A2- 2 679 985          GB-A- 2 297 706
US-A- 4 968 885          US-A- 5 695 130
US-A1- 2002 122 177     US-A1- 2011 203 931
US-A1- 2013 248 693

**Beschreibung**

Die vorliegende Erfindung betrifft ein Messsystem und ein Verfahren zum Untersuchen von konzentrierten, grösseren Aerosolpartikeln (3) eines Aerosols (2) in der Gasphase, sowie die Verwendung des Messsystems und des Verfahrens.

In unserer Gesellschaft nimmt das Vorkommen der allergischen Rhinitis, auch Pollenallergie oder Heuschnupfen genannt, stetig zu und die Anzahl Betroffener steigt weltweit. In der Schweiz gelten zurzeit 15 - 20% der Bevölkerung als allergisch auf Pollen. Dies macht nicht nur einen wesentlichen Anteil an den Gesundheitskosten aus, sondern auch die ökonomischen Kosten sind nicht zu vernachlässigen.

Um Pollenallergikern in Europa die geeignete Information über den Pollenflug zu geben, müssen 10 bis 20 verschiedene Pollensorten unterschieden werden können. Dabei ist es sehr wichtig, dass sowohl eine qualitative Bestimmung, d.h. die Pollensorte, wie auch eine quantitative Bestimmung, d.h. die Anzahl der Pollenpartikel pro Volumeneinheit und somit die Pollenkonzentration, der Pollen zuverlässig durchgeführt werden kann.

Eine ältere, aber immer noch sehr häufig angewendete Methode zur Messung der Pollen basiert auf Hirst Pollenfallen. In diesen werden Klebestreifen montiert, an welchen sich die in der Luft befindlichen Pollen anheften. Die so gesammelten an den Klebestreifen haftenden Pollen werden dann periodisch im Labor von einer ausgebildeten Fachperson beispielsweise manuell mittels Lichtmikroskopie untersucht und anschliessend identifiziert. Die Resultate der qualitativen und quantitativen Pollenbestimmung liegen deshalb in der Regel erst mit einigen Tagen Zeitverzögerung vor. Zudem ist der Aufwand beträchtlich und kostenintensiv, obwohl von einer Messunsicherheit von bis zu 25% ausgegangen wird.

Deshalb liegen beispielsweise in der Schweiz aufgrund der zurzeit verfügbaren Messmethodik die Pollendaten trotz einer nicht unwesentlichen Ungenauigkeit erst mit einer Verzögerung von ca. einer Woche vor. Hinzu kommt, dass die geografische Auflösung sehr gering ist, da es zurzeit in der Schweiz lediglich 14 Messstationen gibt.

In der neueren Zeit wurden verschiedene Messsysteme zur schnelleren Pollenbestimmung vorgeschlagen. Dabei wird oft die Messung der Fluoreszenz der zu untersuchenden Materialien als geeignete Methode vorgeschlagen.

Pollen sind in der Umgebungsluft zudem oft sehr verdünnt, was eine Bestimmung der Pollen erschwert. Denn insbesondere für eine quantitative Pollenbestimmung müsste bei geringen Pollenkonzentrationen eine sehr grosse Luftmenge über einen sehr langen Zeitraum, beispielsweise mehrere Stunden bis Tage, untersucht werden, um eine sinnvolle Datenmenge zu erhalten. Solch lange Messzeiten sind jedoch nicht nur nicht praktikabel, sondern beispielsweise wegen veränderbarem Pollenflug teilweise auch gar nicht durchführbar. Dies steht in klarem Kontrast zur Erwartung von Anbieter von Pollenflugberichten, dass selbst geringste Pollenmengen von beispielsweise lediglich 10 Pollen je $m^3$ Luft und je Pollensorte in weniger als 1 Stunde korrekt qualitativ und quantitativ bestimmt werden können. Auch für eine gute Frühwarnung für auf Pollen allergische Personen, insbesondere wenn die Pollenkonzentration einen Schwellwert, d.h. eine definierte Konzentration, überschritten hat, ist eine kurze Messzeit wichtig.

Die EP-A-1109005 offenbart ein Zählverfahren für Pollenkörner und eine Pollen-Zählapparatur umfassend das Abscheiden von in einer bestimmten Atmosphärenmenge enthaltenen Partikeln mit Ausnahme der Partikel, die wesentlich kleiner als Pollenkörner sind, und das Veranlassen der abgeschiedenen Partikel eine Durchflusszelle in solch einem Zustand zu durchströmen, dass die Eigenfluoreszenz von jedem Partikel gemessen werden kann. Dabei bleibt die Anzahl der zu messenden Pollenkörner im Aerosol unverändert wobei der Luftvolumenstrom kleiner wird und dadurch die Konzentration erhöht wird. Die in Europa notwendige Unterscheidung von 10 bis 20 verschiedenen Pollensorten ist mit dem vorgeschlagenen Zählverfahren jedoch nicht genügend gut möglich. Das Abscheiden der Pollenkörner vor deren Messung kann zudem zu einer unerwünschten Beeinträchtigung der Pollenkörner führen. Zwar werden die zu messenden Pollen um einen Faktor 15 aufkonzentriert, was jedoch klar zu gering ist, um innert nützlicher Frist zuverlässige qualitative und quantitative Angaben zu Pollen auch bei geringsten Pollenmengen zu erhalten. Dadurch kann beispielsweise nicht nur der Beginn des Pollenflugs nicht frühzeitig genug erkannt werden, sondern Pollenmengen können erst ab einer - für den Allergiker deutlich zu hohen Konzentration - bestimmt werden.

Somit ist es die Aufgabe der vorliegenden Erfindung ein Messsystem zur Verfügung zu stellen, mit welchem eine Vielzahl von unterschiedlichsten Aerosolpartikel wie Pollen innerhalb kurzer Zeit und mit grosser Sicherheit qualitativ und/oder quantitativ auch bei geringsten Pollenmengen bestimmt werden kann, um beispielsweise die Pollenallergiker schon kurz nach dem ersten Pollenflug korrekt zu informieren. Das Messgerät soll kompakt, robust und kostengünstig sein, sodass es vielseitig und idealerweise flexibel, d.h. an wechselnden Orten, eingesetzt werden kann. Zudem soll es möglich sein, einen grösseren Teil der nicht messrelevanten Feinpartikel vor der Messung zu entfernen, u.a. um mögliche Störfaktoren zu vermeiden.

Diese Aufgabe konnte überraschenderweise gelöst werden mit einem Messsystem (7) mit Messsystemeingang (71) und Messsystemausgang (72) zum Untersuchen von konzentrierten, grösseren Aerosolpartikeln (3) eines Aerosols (2) in der Gasphase umfassend einen mehrstufigen Aerosol-Partikel-Konzentrator (1) zum Abtrennen des grössten Teils von Feinpartikeln (21) und eines Teils der Gasphase des Aerosols (2), sowie eine Messkammer (8) zur Analyse der grösseren Aerosolpartikel (3), wobei

i) die Messkammer (8) ein Messgerät (80) zur qualitativen und/oder quantitativen Bestimmung der Aerosolpartikel (3), insbesondere in Echtzeit, umfasst, und

ii) der Aerosol-Partikel-Konzentrator (1) eine erste (4-1) und mindestens eine letzte (4-x) virtuelle Impaktorstufe (4) mit je einem Probeneingang (41), Seitenausgang (4) und Probenausgang (43) umfasst, wobei die virtuelle Impaktorstufen (4) einen grösseren Teil des Aerosols (2) mit Feinpartikeln (21) abtrennt und die grösseren Aerosolpartikel (3) im kleineren Teil des Aerosols (2) konzentriert, wobei der Aerosol-Partikel-Konzentrator (1)

- eine Aerosolansaugpumpe (6) mit Aerosoleingang (61) und Aerosolausgang (62) umfasst zum Erzeugen eines Unterdrucks in virtuellen Impaktorstufen (4), wobei der Seitenausgang (42) der ersten virtuellen Impaktorstufe (4-1) mit dem Aerosoleingang (61) verbunden ist, sowie

- einen Kreisstromkanal (64) umfasst, in welchem ein Teil des abgetrennten Aerosols mit Feinpartikeln (21) im Kreisstrom vom Aerosolausgang (62) zum Aerosoleingang (61) der Aerosolansaugpumpe (6) zurückgeführt wird, wobei der Seitenausgang (42) mindestens einer weiteren (4-2) und/oder der letzten (4-x) virtuellen Impaktorstufe (4) mit dem Kreisstromkanal (64) verbunden ist.

Beansprucht wird auch ein Verfahren zum Untersuchen von konzentrierten, grösseren Aerosolpartikeln (3) eines Aerosols (2) mit dem erfindungsgemässen Messsystem (7), wobei

i) mit dem Aerosol-Partikel-Konzentrator (1) der bei Normaldruck grössere Volumenanteil des Aerosols (2) mit den Feinpartikeln (21) über den Seitenausgang (42) der virtuellen Impaktorstufen (4, 4-1, 4-x), und gegebenenfalls mindestens einer weiteren virtuellen Impaktorstufe (4, 4-2), abgetrennt wird, wobei der Seitenausgang (42) mindestens einer weiteren (4-2) und/oder der letzten (4-x) virtuellen Impaktorstufe (4) mit dem Kreisstromkanal (64) verbunden ist,

ii) die grösseren Aerosolpartikel (3) im kleineren Teil des Aerosols (2) konzentriert und durch den Probenausgang (43) der ersten virtuellen Impaktorstufe (4, 4-1), gegebenenfalls über mindestens eine weitere virtuelle Impaktorstufe (4, 4-2), zur letzten virtuellen Impaktorstufe (4, 4-x) und anschliessend zur Messkammer (8) geführt werden, und

iii) die grösseren Aerosolpartikel (3) in der Messkammer (8) mit dem Messgerät (80) zur qualitativen und/oder quantitativen Bestimmung der Aerosolpartikel (3) in der Gasphase, und bevorzugt in Echtzeit, untersucht werden.

Zudem wird auch die Verwendung des erfindungsgemässen Messsystems (7) und des erfindungsgemässen Verfahrens zum Untersuchen von Aerosolen (2), insbesondere von konzentrierten Aerosolpartikeln (3) der Aerosole (2), in der Gasphase und bevorzugt in Echtzeit beansprucht.

Überraschenderweise wurde gefunden, dass durch das erfindungsgemässe Messsystem (7), das erfindungsgemässe Verfahren sowie die erfindungsgemässe Verwendung diese anspruchsvolle Aufgabe erfüllt werden kann. Denn aufgrund des Aerosol-Partikel-Konzentrators (1) wird ein grösserer Teil des Aerosols (2) mit Feinpartikeln (21) abgetrennt und die grösseren Aerosolpartikel (3) im kleineren Teil des Aerosols (2) konzentriert. So ist es möglich die zu untersuchenden grösseren Aerosolpartikel (3) beispielsweise, um einen Faktor von bis 1000 oder mehr aufzukonzentrieren. Dadurch können die grösseren Aerosolpartikel (3) eines wesentlich grösseren Gasvolumens in einer viel kleineren Messkammer (8) des Messsystems (7) auf kleinstem Raum mit dem Messgerät (80) sowohl qualitativ wie auch quantitativ schnell und im Flug, d.h. in der Gasphase, - und somit in Echtzeit - analysiert, d.h. untersucht, werden. Und der Anteil der ursprünglich im Aerosol (2) befindlichen Feinpartikel (21) wird drastisch reduziert oder ganz entfernt, sodass höchstens nur ein sehr kleiner, für die Messung der grösseren Aerosolpartikel nur unwesentlichen, Anteil an Feinpartikeln (21) - zusammen mit den grösseren Aerosolpartikeln (3) - in die Messkammer (8) gelangen. Somit können relevante qualitative Informationen zu Pollen den Allergikern innerhalb von Minuten und quantitative Mengenangaben beispielsweise innerhalb von weniger als einer Stunde mit hoher Präzision zur Verfügung gestellt werden.

Der Aerosol-Partikel-Konzentrator (1) umfasst einen Kreisstromkanal (64), in welchem ein Teil des abgetrennten Aerosols mit Feinpartikeln (21) im Kreisstrom vom Aerosolausgang (62) zum Aerosoleingang (61) der Aerosolansaugpumpe (6) zurückgeführt wird. Somit kann von einem grösseren Ansaugvolumenstrom des Aerosols (2) mittels des mehrstufigen Aerosol-Partikel-Konzentrators (1), d.h. Aerosol-Partikel-Konzentrator (1) mit mehreren, d.h. mindestens zwei, virtuellen Impaktorstufen (4), ein wesentlich kleinerer Volumenstrom, in welchem die grösseren Aerosolpartikel (3) konzentriert sind, ausgeschieden werden. Dadurch kann beispielsweise ein Volumenstrom von 40 l/min anhand von drei Konzentrationsstufen, d.h. mit drei virtuellen Impaktorstufen (4), um einen Faktor 1000, und somit auf lediglich 0.04 l/min reduziert werden. Dieser kleine Volumenstrom umfassend die darin konzentrierten Aerosolpartikel (3) wird in der Messkammer mit dem mindestens einen Messgerät (80) untersucht. Dies erlaubt überraschenderweise eine zuverlässige quantitative Bestimmung auch von geringsten Pollenmengen, beispielsweis von lediglich 10 Pollenpartikeln pro $m^3$ Luft, innerhalb von 1 Stunde oder weniger. Ohne den im Aerosol-Partikel-Konzentrator (1) erfindungsgemäss eingesetzten Kreisstromkanal (64) ist es nicht möglich, die grösseren Aerosolpartikel (3) so stark zu konzentrieren sowie eine sehr geringe Pollenpartikelkonzentration innerhalb so kurzer Zeit qualitativ und quantitativ zu bestimmen. Es wird bemerkt, dass die Bestimmung der Aerosolpartikel (3) bevorzugt in Echtzeit gemessen wird, wobei zur quantitativen Bestimmung der Pollenkonzentration eine akkumulierte Messzeit-während welcher eine Vielzahl von Pollen in Echtzeit bestimmt wird - von beispielsweise einer Stunde notwendig ist.

Die Funktionsweise des erfindungsgemäss eingesetzten Kreisstromkanals (64) wird wie folgt verstanden: Die Aerosolansaugpumpe (6) generiert im Bereich des Aerosoleingangs (61) einen Unterdruck, um Aerosol (2) anzusaugen. Dieses tritt - zumindest teilweise - durch den Aerosolausgang (62) wieder aus. Ein Teil davon wird im Kreisstromkanal (64) wieder zurück zum Aerosoleingang (61) geführt, wobei der Kreisstromkanal (64) zunächst in einem ersten Abschnitt Richtung Messkammer (8) geführt wird und anschliessend in einem zweiten Abschnitt in Richtung Aerosoleingang (61) umgeleitet wird. Dabei ist der zweite Abschnitt zwischen dem - typischerweise zentral angeordneten - Verbindungskanal (5) mit den grösseren Aerosolpartikeln (3) und dem ersten Abschnitt des Kreisstromkanals (64) angeordnet. Die Seitenausgänge (42) der weiteren (4-2) virtuellen Impaktorstufen (4) sind mit dem zweiten Abschnitt des Kreisstromkanal (64) verbunden, welcher zum Aerosoleingang (61) der Aerosolansaugpumpe (6) führt. Der Unterdruck im Bereich des Aerosoleingangs (61) wird nun vorteilhafterweise so eingestellt, dass der im Kreisstromkanal (64) geführte andere Teil des Aerosols mit Feinpartikeln (21-2) nicht nur durch diesen Unterdruck angesogen wird, sondern auch dass dort, wo die Seitenausgänge (42) der weiteren (4-2) virtuellen Impaktorstufen (4) mit dem zweiten Abschnitt des Kreisstromkanals (64) verbunden sind, ein niedriger Druck herrscht als innerhalb der weiteren resp. letzten virtuellen Impaktorstufe (4-2, 4-x). Denn dadurch dient die Aerosolansaugpumpe (6) auch als Ansaugpumpe der weiteren resp. letzten virtuellen Impaktorstufe (4-2, 4-x). Diese Anordnung erlaubt überraschenderweise das Ansaugen von Gas und gegebenenfalls von Aerosolen mit Feinpartikeln (21-1) durch Seitenausgänge (42) von sehr klein dimensionierten virtuellen Impaktorstufen (4), insbesondere von weiteren virtuellen Impaktorstufen (4-2) sowie der letzten virtuellen Impaktorstufe (4-x). So werden durch den Strömungsfluss innerhalb des Kreisstromkanals (64) die bei den Seitenausgängen (42) ausströmenden Gasanteile, die gegebenenfalls noch weitere Feinpartikel (21) enthalten können, abgesogen und zum Aerosoleingang (61) gefördert. Dadurch werden die grösseren Aerosolpartikel (3) bei den weiteren und der letzten virtuellen Impaktorstufen (4-2, 4-x) ohne eine zusätzliche Luftansaugpumpe effizient weiter aufkonzentriert.

Ohne Kreisstromkanal (64) ist es nicht möglich, insbesondere eine quantitative, Pollenbestimmungen auch von geringsten Pollenkonzentrationen innerhalb von beispielsweise einer Stunde oder weniger vorzunehmen. Denn ohne Kreisstromkanal (64) müssten bei einem Messsystem (7) zum Untersuchen von grösseren Aerosolpartikeln (3) eines Aerosols (2) in der Gasphase die Seitenausgänge (42) der weiteren virtuellen Impaktorstufen (4-x) des mehrstufigen Aerosol-Partikel-Konzentrators (1) so dünn bemessen werden, dass sie nicht - oder zumindest nicht innerhalb der benötigten Toleranz - hergestellt werden könnten. Zudem erhöht sich die Gefahr von Ablagerungen durch Feinpartikel (21) und somit einer Verstopfung der Seitenausgänge (42). Mit anderen Worten: Ein Volumenstrom beim Messsystemeingang (71) von beispielsweise 40 l/min könnte ohne Kreisstromkanal (64) nicht um einen Faktor von 1000 aufkonzentriert werden. Die Folge davon wäre u.a. ein geringerer Konzentrationsfaktor und somit bei kleinen Pollenkonzentrationen eine wesentlich höhere benötigte Messzeit, d.h. Beobachtungszeit, um eine quantitative Angabe zur Pollenzahl zu erhalten, d.h. um eine statistisch signifikante Stichprobe für die grösseren Aerosolpartikel (3) zu erproben. Wird jedoch der Aerosol-Partikel-Konzentrator (1) mit dem Kreisstromkanal (64) ausgestattet, können die Seitenausgänge (42) grösser dimensioniert werden, da zusätzlich zu dem Aerosolanteil, welcher mittels Impaktorstufen (4-2, 4-x) abgesondert wird, auch der andere Teil des Aerosols mit Feinpartikeln (21-2) zurück zum Aerosoleingang (61) geführt wird. Somit erlaubt die Anwesenheit des Kreisstromkanals (64) überraschenderweise ein Aufkonzentrieren des angesaugten Aerosols (2) - und somit der zu untersuchenden grösseren Aerosolpartikel (3) im Aerosol (2) - um einen wesentlich grösseren Faktor. Dies wiederum ermöglicht insbesondere eine quantitative Bestimmung von grösseren Aerosolpartikeln (3) innerhalb einer kurzen Messzeit, auch wenn sie in äusserst kleinen Konzentrationen im zu untersuchenden Aerosol (2) vorliegen.

Überraschenderweise können mit dem erfindungsgemässen Messsystem (7) umfassend die Messkammer (8) mit dem mindestens einen Messgerät (80) jegliche grösseren Aerosolpartikel (3) untersucht werden. Aufgrund der möglichen unterschiedlichen Messgeräte (80), die eingesetzt werden können, müssen die Aerosolopartikel (3) in Bezug auf ihre chemische Zusammensetzung keinerlei Anforderungen erfüllen. Die minimale Grösse der Aerosolpartikel (3) kann mittels Anpassung der virtuellen Impaktorstufen (4) den Bedürfnissen angepasst werden.

Zudem ist das Messsystem (7) robust, schnell, effizient und in der Regel auch bei üblicherweise verfügbarer Betriebsspannung einsetzbar, wodurch es auch im Aussenbereich und/oder als mobiles Messgerät geeignet ist. Zudem kann es kostengünstig und mit geringen Abmessungen gebaut werden. So kann beispielsweise die Messkammer (8) mit Aussenmassen von etwa 10 x 5 $\times$ 5 cm$^3$ und das Messsystem (7) mit Aussenmassen von etwa 30 x 30 x 30 cm$^3$ gebaut werden, wodurch es an zusätzlicher Attraktivität gewinnt. Dadurch können ohne nennenswerten Aufwand und zu vertretbaren Kosten wesentlich mehr Pollenmessstationen aufgebaut werden und der Automationsgrad der Pollenbestimmung kann deutlich erhöht werden, was zu einem dichteren Pollenflug-Datennetz und somit zu einer besseren räumlichen Auflösung führt. Somit werden den Pollenallergikern wesentlich schneller viel exaktere Informationen zum tagesaktuellen Pollenflug bereitgestellt, was wiederum die Lebensqualität der Pollenallergiker erhöht und die volkswirtschaftlichen Kosten senkt.

Somit kann das erfindungsgemässe Messsystem (7) überraschenderweise äusserst vielfältig verwendet werden. Auch können sehr schnell bewegliche Partikel wie Aerosolpartikel von Aerosolen, insbesondere eine Vielzahl - beispielsweise 20 oder mehr - an unterschiedlichen Pollen und Sporen, in Echtzeit und sogar im Flug quantitativ und qualitativ untersucht und voneinander unterschieden werden, was bis anhin nicht möglich gewesen ist.

Die EP-A-2 679 985 offenbart eine Vorrichtung zur Echtzeit-Fluoreszenzdetektion mit einem Partikelkonzentrator zum Abscheiden und Konzentrieren der Aerosolpartikel und einer an der Unterseite des Partikelkonzentrators angeordneten Partikelmesseinheit. Die Partikelmesseinheit umfasst: einen Einlassteil, der angepasst ist, um die Partikel und Luft von dem Partikel-konzentrator in die Partikelmesseinheit zu leiten; eine optische Kammer mit einem Partikelmessraum, der in ihrem Inneren ausgebildet ist; ein Strahlformungsteil, das angepasst ist, um die Partikel im Messraum mit einem Laserstrahl zu beleuchten; ein Strahlabgabeteil; Reflektoren, die in dem Partikelmessraum in einem Winkel von 90° in Bezug auf die Vorwärtsrichtung des Laserstrahls angeordnet sind; einen Partikelausstossteil, der angepasst ist, um die Partikel und Luft nach aussen auszustossen; und einen Strahlteiler mit einem Streulichtdetektor sowie Fluoreszenzdetektoren, die angepasst sind, um Streulicht und Fluoreszenzlicht zu erfassen, welche durch die Wechselwirkung zwischen dem Laserstrahl und den Partikeln erzeugt werden. Ein Kreisstromkanal, in welchem ein Teil des abgetrennten Aerosols mit Feinpartikeln im Kreisstrom vom Aerosolausgang zum Aerosoleingang derselben Aerosolansaugpumpe zurückgeführt wird, wird nicht erwähnt.

Die US 4,968,885 beschreibt ein Verfahren und eine Vorrichtung zum Einbringen flüssiger Proben in chemische Detektoren, bei welchen die flüssigen Proben entweder in einen gasförmigen oder in einen teilchenförmigen Zustand umgewandelt werden. Die angereicherten gelösten Teilchen werden verdampft, ionisiert und/oder durch geeignete Gasphasen- oder Teilchendetektoren nachgewiesen. Das Gerät ist in erster Linie eine Schnittstelle zwischen einem Flüssigchromatographen resp. Prozessströmen und dem Massenspektrometer. Somit wird kein Messgerät umfassend einen Aerosol-Partikel-Konzentrator im Sinn der vorliegenden Erfindung beschrieben. Auch wird kein Kreisstromkanal erwähnt, in welchem ein Teil des abgetrennten Aerosols mit Feinpartikeln im Kreisstrom vom Aerosolausgang zum Aerosoleingang derselben Aerosolansaugpumpe zurückgeführt wird.

Die US-A-2011/0203931 offenbart Vorrichtungen, Apparaturen und Verfahren zur berührungslosen pneumatischen Probenahme und Probenahme von Oberflächen, Personen, Kleidungsstücken, Gebäuden, Einrichtungsgegenständen, Fahrzeugen, Gepäckstücken, Paketen, Post und dergleichen zur Untersuchung der Kontamination durch Aerosole oder Dämpfen, die eine Gefahr anzeigen, wobei die kontaminierenden Aerosole oder Dämpfe chemischen, radiologischen, biologischen, toxischen oder infektiösen Charakter haben. In einer ersten Vorrichtung ist eine zentrale Öffnung zum Ziehen eines Sauggasstroms von einer peripheren Anordnung von konvergierend gerichteten Gasstrahlen umgeben, die eine virtuelle Probenahmekammer bilden. Die Gasstrahlen sind so konfiguriert, dass sie pneumatische Millisekunden-Impulse abgeben, die Partikel und Dämpfe von festen Oberflächen in einiger Entfernung abtragen. In einem weiteren Aspekt der Erfindung wird ein Sauggasstrom unter Verwendung eines Luft-Luft-Konzentrators aufgeteilt, so dass ein mit Partikeln angereicherter Gasstrom zu einer Partikelfalle geleitet wird und darin immobilisierte Partikel selektiv auf Sprengstoffe und Sprengstoff bezogene Materialien unter Optimierung analysiert werden. Die Bedingungen für die Analyse partikelassoziierter Bestandteile und ein Massenstrom werden auf eine Dampfsperre gerichtet, und darin immobilisierte freie Dämpfe werden unter optimierten Bedingungen für die Analyse freier Dämpfe selektiv auf Sprengstoffe und Sprengstoffmaterialien analysiert. Dabei werden Detektionssignale aus dem Partikelkanal und dem Dampfkanal verglichen oder integriert, um mit Sprengstoffen verbundene Spurenrückstände zu detektieren. Somit wird kein Messgerät umfassend einen Aerosol-Partikel-Konzentrator im Sinn der vorliegenden Erfindung beschrieben. Auch wird kein Kreisstromkanal erwähnt, in welchem ein Teil des abgetrennten Aerosols mit Feinpartikeln im Kreisstrom vom Aerosolausgang zum Aerosoleingang derselben Aerosolansaugpumpe zurückgeführt wird.

Das Messsystem (7)

Das erfindungsgemässe Messsystem (7) ist geeignet zum Untersuchen, d.h. Analysieren, von konzentrierten, grösseren Aerosolpartikeln (3) eines Aerosols (2) in der Gasphase. Das Messsystem (7) weist einen typischerweise im oberen Bereich des Messsystems (7) angeordneten Messsystemeingang (71) und einen typischerweise im unteren Bereich des Messsystems (7) angeordneten Messsystemausgang (72) auf. Das Aerosol (2) gelangt durch den Messsystemeingang (71) in das Messsystem (7) In einem ersten Teil des Messsystems (7) wird zumindest ein Grossteil der kleineren Feinpartikel (21) mit dem grösseren Volumenanteil des Aerosols von den grösseren Aerosolpartikel (3) in einem kleineren Volumenanteil des Aerosols anhand eines mehrstufigen Aerosol-Partikel-Konzentrators (1) abgetrennt. Die im kleineren Volumenanteil des Aerosols konzentrierten Aerosolpartikel (3) werden anschliessend durch die Messkammer (8) geleitet und mit dem mindestens einen Messgerät (80) untersucht. Anschliessend verlassen die Aerosolpartikel (3) das Messsystem (7) durch den Messsystemausgang (72). Somit werden die Aerosolpartikel (3) für die Analyse nicht abgetrennt, sondern bleiben während der ganzen Zeit in der Gasphase. Die Messung der Aerosolpartikel (3) erfolgt somit im Flug und in Sekundenbruchteilen. Die Auswertung der Messdaten in Echtzeit ist möglich und bevorzugt.

Dabei wird gemäss vorliegender Erfindung unter Echtzeit verstanden, dass die Messung sofort und somit in einem Sekundenbruchteil, beispielsweise während einigen Nano-, Mikro- oder Millisekunden, erfolgen kann. Die anschliessende Auswertung der erhaltenen Daten dauert je nach erhaltener Datenmenge und Rechnerleistung typischerweise Sekunden bis wenige Stunden. Somit können Materialien (2) bestimmt werden, die nur während einer äusserst kurzen Zeit analysierbar sind.

Das Messsystem (7) umfasst somit einen mehrstufigen Aerosol-Partikel-Konzentrator (1) zum Abtrennen von Feinpartikeln (21) und eines grösseren Teils der Gasphase des Aerosols (2) sowie zum Aufkonzentrieren der grösseren Aerosolpartikel (3) in einem kleineren Teil der Gasphase. Zudem umfasst das Messsystem (7) eine Messkammer (8) mit mindestens einem Messgerät (80) zur qualitativen und/oder quantitativen Bestimmung, d.h. Analyse, der konzentrierten grösseren Aerosolpartikel (3), insbesondere in Echtzeit.

Das Messsystem (7) weist ganz besonders bevorzugt eine zylinderförmige Bauform auf. Dabei sind die virtuellen Impaktorstufen (4, 4-1, 4-2, 4-x), die Verbindungskanäle (5, 5-1, 5-2, 5-3) sowie die Messkammer (8) in Serie, vorteilhafterweise linear und in der Mitte der zylindrischen Bauform, angeordnet. Die Bereiche, die beispielsweise vom Kreisstromkanal (64) und vom Rest-Aerosolkanal (63) vollständig umschlossen sind, werden punktuell von feinen Verbindungselementen gehalten, um dem Messsystem (7) mit Kreisstromkanal (64) die notwendige Stabilität zu geben.

Das Messsystem (7) umfasst vorteilhafterweise mindestens ein Durchflussregulierventil um den Aerosol-Durchfluss und gegebenenfalls den Unterdruck im Aerosol-Partikel-Konzentrator (1) und/oder in der Aerosolansaugpumpe (6) zu regulieren. Das mindestens eine Durchflussregulierventil kann beispielsweise beim Aerosolausgang (62) der Aerosolansaugpumpe (6), im Rest-Aerosolkanal (63) und/oder im Kreisstromkanal (64) angebracht sein. Geeignete Durchflussregulierventile sind dem Fachmann bekannt.

Der Aerosol-Partikel-Konzentrator (1)

Der Aerosol-Partikel-Konzentrator (1) umfasst mindestens eine erste (4-1) und mindestens eine letzte (4-x) virtuelle Impaktorstufe (4) mit je einem Probeneingang (41), Seitenausgang (42) und Probenausgang (43), wobei die virtuellen Impaktorstufen (4) einen grösseren Teil des Aerosols (2) mit Feinpartikeln (21) abtrennt und die grösseren Aerosolpartikel (3) im kleineren Teil des Aerosols (2) konzentriert. Dies erlaubt schnellere Messungen, da pro gemessene Zeiteinheit eine grössere Anzahl an Aerosolpartikeln untersucht werden kann und somit mehr Messwerte pro Zeiteinheit zur Verfügung stehen. So können auch kleine Partikelkonzentrationen in kürzerer Zeit und/oder mit höherer Genauigkeit ermittelt werden.

Der Aerosol-Partikel-Konzentrator (1) der vorliegenden Erfindung ist ein mehrstufiger Aerosol-Partikel-Konzentrator (1), d.h. er umfasst mehrere gleiche oder ähnliche, insbesondere mindestens zwei virtuelle Impaktorstufen (4) um die Aerosolpartikel (3) in mehreren Schritten in einem Teil des Aerosols (2) aufzukonzentrieren.

Virtuelle Impaktorstufen (4) sind dem Fachmann bekannt. Sie weisen typischerweise zwei parallele Platten auf, die in einem Winkel von 90° zur Fliessrichtung des Aerosols angeordnet sind und die in der Mitte der Platten je eine Öffnung aufweisen. In der Mitte der oberen Platte ist eine Düse, d.h. eine Verjüngung, angeordnet, durch welche das Aerosol fliesst und in welcher das Aerosol beschleunigt wird. Aufgrund der Geometrie der virtuellen Impaktorstufe (4) wird der grössere Teil des Aerosols (2) mit Feinpartikeln (21) zwischen den Platten abgetrennt und seitlich abgeführt. Der kleinere Teil des Aerosols (2) strömt zusammen mit den grösseren Aerosolpartikeln (3) durch die Öffnung der unteren Platte.

Der mehrstufige Aerosol-Partikel-Konzentrator (1) umfasst mindestens zwei virtuelle Impaktorstufen (4), d.h. eine erste virtuelle Impaktorstufe (4-1), gegebenenfalls mindestens eine weitere virtuelle Impaktorstufe (4-2), und eine letzte virtuelle Impaktorstufe (4-x). Dabei sind die Impaktorstufen (4) bevorzugt mit den Verbindungskanälen (5) verbunden. Dabei sind der Messsystemeingang (71), die virtuellen Impaktorstufen (4), die Verbindungskanäle (5) sowie die Messkammer (8) vorteilhafterweise linear und somit in einer Reihe, insbesondere auch vertikal, angeordnet. Dabei befindet sich typischerweise der Messsystemeingang (71) an der obersten Stelle dieser Anordnung, wodurch die grösseren Aerosolpartikel (3) auch mit Hilfe der Gravitation vom Messsystemeingang (71) in Richtung Messkammer (8) gefördert werden.

Die virtuellen Impaktorstufen (4) des erfindungsgemässen Messsystems (7) und des erfindungsgemässen Verfahrens werden typischerweise mittels der Stokes-Zahl definiert, wobei vorteilhafterweise folgende Bedingungen erfüllt werden:

$$(St)^{1/2} \geq 0.4 \qquad (1)$$

wobei

$$St = (d_p^2 * C * u_j * \rho_p) / (9 * l * \mu) \qquad (2)$$

und

St = Stokes-Zahl [-],
$d_p$ = Cutoff-Durchmesser der zu konzentrierenden Aerosolpartikel (3) [m],
C = Cunningham-Faktor [-]
$u_j$ = mittlere Strahlgeschwindigkeit [m/s]
$\rho_p$ = Dichte der Partikel [kg/m$^3$]
I = Düsendurchmesser [m] des Probeneingangs
$\mu$ = dynamische Fluidviskosität [Pa∗s]

Unter Cutoff-Durchmesser $d_p$ wird der Durchmesser derjenigen Aerosol-partikel verstanden, welche als kleinste der grösseren Aerosolpartikel (3) mit dem kleineren Teil des Aerosols (2) nicht abgeschieden werden sollen. Sollen beispielsweise Pollen mit einem mittleren Durchmesser von etwa 20 $\mu$m oder grösser gemessen werden, wird bevorzugt in Gleichung (2) mit einem Cutoff-Durchmesser von beispielsweise 10 $\mu$m gerechnet.

Der Cunningham-Faktor C ist eine dimensionslose, materialspezifische Kennzahl. Zur Berechnung der Stokes-Zahl gemäss Gleichung (1) und (2) wird erfindungsgemäss und mit guter Näherung ein Cunningham-Faktor von 1 eingesetzt.

Die mittlere Strahlgeschwindigkeit $u_j$ ergibt sich aus dem Düsendurchmesser und dem Volumenstrom.

Als Dichte der Partikel $\rho_p$ kann die Dichte der abzutrennenden Aerosolpartikel eingesetzt werden. Für Pollen kann die Dichte im Bereich von 500 kg/m$^3$ bis 1200 kg/m$^3$ liegen. Falls keine Angaben zur Dichte vorfügbar sind, wird die Stokeszahl erfindungsgemäss mit einer Partikeldichte von 600 kg/m$^3$ berechnet.

Der Düsendurchmesser I des Probeneingangs (41) kann systemabhängig variiert werden. Für die Untersuchung von Pollen eignet sich oft ein Düsendurchmesser für die letzte Impaktorstufe (4-x) von beispielsweise 1.5 mm.

Als dynamische Fluidviskosität $\mu$ wird die dynamische Fluidviskosität von Luft mit einer Dichte von 1.185 kg/m$^3$ bei 25°C verwendet. Dabei wird erfindungsgemäss zur Berechnung der Stokes-Zahl die Luft als inkompressibel betrachtet und daher ein Wert von 1.831e-5 Pa∗s verwendet.

Der Aerosol-Partikel-Konzentrator (1) des erfindungsgemässen Messgeräts (7) und des erfindungsgemässen Verfahrens weist bevorzugt mindestens zwei in Serie angeordnete virtuelle Impaktorstufen (4) mit je einem Probeneingang (41), Seitenausgang (42) und Probenausgang (43) auf, sowie mindestens drei durch die Impaktorstufen (4) voneinander getrennte Verbindungskanäle (5).

Der Aerosol-Partikel-Konzentrators (1) der vorliegenden Erfindung umfasst zudem eine Aerosolansaugpumpe (6) mit Aerosoleingang (61) und Aerosolausgang (62) zum Erzeugen eines Unterdrucks in den virtuellen Impaktorstufen (4), wobei der Seitenausgang (42) der ersten virtuellen Impaktorstufe (4-1) mit dem Aerosoleingang (61) verbunden ist, sowie einen Kreisstromkanal (64), in welchem ein Teil des abgetrennten Aerosols mit Feinpartikeln (21) im Kreisstrom vom Aerosolausgang (62) zum Aerosoleingang (61) der Aerosolansaugpumpe (6) zurückgeführt wird, wobei der Seitenausgang (42) mindestens einer weiteren (4-2) und/oder der letzten /4-x) Impaktorstufe (4) verbunden ist. Die Aerosolansaugpumpe (6) ist typischerweise eine Gasresp. Luftansaugpumpe, die auch geeignet ist, Aerosole anzusaugen.

In einer bevorzugten Ausführungsform des Messsystems (7) stellt

i) die Aerosolansaugpumpe (6) einen Radialventilator (60) oder eine statische Druckverteilanordnung (65) mit Luftpumpe (66) dar, wobei in der Mitte des Radialventilators (60) oder in der Mitte der statischen Druckverteilanordnung (65) eine Aerosolansaugöffnung, d.h. der Aerosoleingang (61), angeordnet ist, und/oder

ii) das Messsystem (1) umfasst eine weitere Aerosolansaugpumpe (9), die zwischen der Messkammer (8) und dem Messsystemausgang (72) angeordnet ist.

Dabei wird unter den Begriffen "in der Mitte des Radialventilators (60)" und "in der Mitte der statischen Druckverteilanordnung (65)" der Mittelbereich des rechtwinklig zur Flugrichtung der grösseren Aerosolpartikel (3) gemessenen Querschnitts des Radialventilators (60) resp. der statischen Druckverteilanordnung (65) verstanden.

Unter Radialventilator (60) wird erfindungsgemäss ein Ventilator verstanden, welcher die Luft - und somit das Aerosol (2) - welche parallel zur Antriebsachse des Ventilators durch den Messsystemeingang (71) in das Messgerät (7) gelangt, ansaugt und durch die Rotation des Radiallaufrads der grössere Anteil des Aerosols (2) zusammen mit den Feinpartikeln (21) um 90° umgelenkt und radial, d.h. seitlich, ausbläst. Dabei können die Ventilatorschaufeln des Radialventilators (60) zwischen dem Probeneingang (41) und dem Seitenausgang (42) oder nur im Seitenausgang (42) der ersten Impaktorstufe (4-1) angeordnet sein. Dabei ist die Aerosolansaugöffnung bevorzugt in der Mitte des Radialventilators (60) angeordnet. Vorteilhafterweise wird der erfindungsgemäss eingesetzte Radialventilator (60) mit der ersten virtuellen Impaktorstufe (4) kombiniert, indem der Seitenausgang (42) der virtuellen Impaktorstufe (4) und das eine Ende des Kreisstromkanals (64) der Aerosolansaugöffnung des Radialventilators (60) und somit auch dem Aerosoleingang (61) der Aerosolansaugpumpe (6), d.h. dem Radialventilator (60), entspricht. Zudem umfasst der Radialventilator (60) vorteilhafterweise einen Aussenläufermotor mit Hohlwelle, oder einen externen Antrieb, verbunden beispielsweise über Ritzel oder Riemen. In einer bevorzugten Ausführungsform ist der Radialventilator (60) ein Radialventilator mit axialem Durchlass.

Unter statischer Druckverteilanordnung (65) wird eine typischerweise runde, scheibenartige und statische Anordnung verstanden, durch welche der grössere Teil des Aerosols (2) mit Feinpartikeln (21) - vom Messsystemeingang (71) des Messgeräts (7) herkommend - strömt. Die Druckverteilanordnung (65) ist bevorzugt um den Aerosoleingang (61) der Aerosolansaugpumpe (6), d.h. der Druckverteilanordnung (65) mit Luftpumpe (66), angeordnet und umfasst einen an den Aerosoleingang (61) angrenzenden ersten Bereich. In diesem ersten Bereich befindet sich die Ansaugöffnung der Luftpumpe (66) sowie gegebenenfalls, insbesondere bevorzugt, mindestens eine Vorrichtung, um den durch die Luftpumpe (66) generierten Unterdruck möglichst gleichmässig zu verteilen. Eine solche Vorrichtung umfasst beispielsweise Wandungen mit einer Vielzahl von Öffnungen (65a). Der von der Luftansaugpumpe (66) generierte Unterdruck saugt ein Teil des Aerosols (2) mit Feinpartikeln (21) an und führt dieses durch den Aerosolrückführeinlass (66b) in einen zweiten Bereich, welcher vom ersten Bereich durch eine Wandung ohne Öffnungen (65b) getrennt ist. Der zweite Bereich umfasst mindestens einen Aerosolausgang (62), durch welche das Aerosol (2) zusammen mit den Feinpartikeln (21) zum Rest-Aerosolkanal (63) geführt wird, sowie mindestens eine, bevorzugt eine Vielzahl von, Öffnung (65c) zum Kreisstromkanal (64). Dabei sind vorteilhafterweise der Aerosolrückführeinlass (66b), der Aerosolausgang (62) sowie die mindestens eine Öffnung (65c) mit mindestens einer Vorrichtung voneinander getrennt, um die durch die verschiedenen Ein-/Auslässe des Aerosols (2) mit Feinpartikeln (21) entstehenden Druckunterschiede optimal zu verteilen. Dabei kann der zweite Bereich den ersten Bereich seitlich umschliessen und/oder beispielsweise unterhalb des ersten Bereichs angeordnet sein. Die Druckverteilanordnung (65) ist gegen aussen vorteilhafterweise ebenfalls mit einer Wandung (65b) ohne Öffnungen begrenzt.

Das Aerosol (2) mit den Feinpartikeln (21) wird somit vom Messsystemeingang (71) aufgrund der Sogwirkung der Luftpumpe (66) in der ersten virtuellen Impaktorstufe (4-1) um 90° umgelenkt und durch den Seitenausgang (42) der virtuellen Impaktorstufe (4-1) in den Aerosoleingang (61) der Druckverteilanordnung (65) gesogen. Durch die Ansaugöffnung (66a) der Luftpumpe (66) wird der umgelenkte Teil des Aerosols (2) mit Feinpartikeln (21) aus dem ersten Bereich der Druckverteilanordnung (65) zur Luftpumpe (66) gesogen und von dort wieder - mittels Gasaustrittsdruck - durch den Aerosolrückführeinlass (66b) in den zweiten Bereich der Druckverteilanordnung (65) gepresst. Von dort gelangt ein Teil des Aerosols mit Feinpartikeln (21-1) durch den Aerosolausgang (62) in den Rest-Aerosolkanal (63). Der andere Teil des Aerosols mit Feinpartikeln (21-2) gelangt über die mindestens eine Öffnung (65c) in den Kreisstromkanal (64) und von dort wieder zurück zum Aerosoleingang (61).

Der Querschnitt des Radialventilators (60) und/oder der Druckverteilanordnung (65) kann - rechtwinklig zur Flugrichtung der grösseren Aerosol-partikel (3) gemessen - beispielsweise einen Querschnitt aufweisen, welcher mit demjenigen des Messsystems (7) vergleichbar ist, wobei der Querschnitt des Radialventilators (60) resp. der Druckverteilanordnung (65) auch kleiner sein kann. Die Höhe des Radialventilators (60) und/oder der Druckverteilanordnung (65) - gemessen in Flugrichtung der grösseren Aerosolpartikel (3) - kann beispielsweise zwischen 0.5 cm und 20 cm oder mehr betragen.

Die mit der statischen Druckverteilanordnung (65) verbundene Luftpumpe (66), d.h. Luftansaugpumpe (66), saugt den grösseren Teil des Aerosols (2) mit Feinpartikeln (21) an und fördert sie - zumindest zum Teil -wieder zurück in die Druckverteilanordnung (65). Dadurch wird die Funktionsweise der virtuellen Impaktorstufen (4) ermöglich, sofern eine statische Druckverteilanordnung (65) vorhanden ist. Die Luftpumpen (65) sind Gaspumpen und erzeugen eine Druckdifferenz, wobei der niedrigere Druck, d.h. ein relativ zum Aussendruck ein Unterdruck auf der Seite der ersten virtuellen Impaktorstufe angeordnet ist.

Unter Kreisstromkanal (64) wird erfindungsgemäss verstanden, dass ein Teil des grösseren Teils des Aerosols (2) mit Feinpartikeln (21) im Kreis geführt wird. Dabei führt der Kreisstromkanal (64) einen Teil des angesaugten Aerosols mit Aerosol-Feinpartikeln (21) vom Aerosolausgang (62) im Kreisstrom zum Aerosoleingang (61) der Aerosolansaugpumpe (6) zurück. Dabei sind die Seitenausgänge (42) der weiteren (4-2) und der letzten (4-x) virtuellen Impaktorstufe (4) mit dem Kreisstromkanal (64) verbunden. Durch den Strömungsfluss innerhalb des Kreisstromkanals (64) werden die bei den Seitenausgängen (42) ausströmenden Gasanteile, die gegebenenfalls noch weitere Feinpartikel (21) enthalten können, abgesogen und zum Aerosoleingang (61) gefördert.

Weist das Messsystem (7) eine statische Druckverteilanordnung (65) mit Luftpumpe (66) und eine weitere Aerosolansaugpumpe (9) auf, können die Luftpumpe (66) und die Aerosolansaugpumpe (9) baugleich sein.

In einer bevorzugten Ausführungsform ist der Aerosolausgang (62) der Aerosolansaugpumpe (6) sowohl a) mit einem Rest-Aerosolkanal (63), welcher einen Teil (21-1) des angesaugten Aerosols mit Aerosol-Feinpartikeln (21) abführt, als auch mit b) einem Kreisstromkanal (64) verbunden, wobei der Kreisstromkanal (64) den anderen Teil (21-2) des angesaugten Aerosols mit Aerosol-Feinpartikeln (21) im Kreisstrom zum Aerosoleingang (61) der Aerosolansaugpumpe (6) zurückführt.

Diese Anordnung erlaubt eine effiziente Führung des Kreisstroms im Kreisstromkanal (64), wobei auch bei den Seitenausgängen (42) der weiteren virtuellen Impaktorstufen (4-2, 4-x) ein Unterdruck entsteht um den Aerosolanteil der Seitenausgänge (42) effizient abführen zu können. Zudem wird kontinuierlich ein Teil (21-1) des angesaugten Aerosols mit Aerosol-Feinpartikeln (21) abgeführt.

In einer anderen bevorzugten Ausführungsform des erfindungsgemässen Messsystems (7) und des erfindungsgemässen Verfahrens wird dem Probenausgang (43) der in Aerosolfliessrichtung letzten virtuellen Impaktorstufe (4-x) ein Mantelstrom zugeführt, wobei der Mantelstrom i) einen vom Kreisstromkanal (64) abgezweigten Teil, oder ii) der Rest-Aerosolkanal (63), oder ein Teil desselben, darstellt. Dies erlaubt eine noch bessere Bündelung - und somit Analyse - der grösseren Aerosolpartikel (3) im aufkonzentrierten, kleineren Teil des Aerosols (2) in der Mitte der Messkammer (8). Dabei weisen überraschenderweise die mit dem Mantelstrom zugeführten Feinpartikel (21) bei der Messung der grösseren Aerosolpartikel (3) keinen störenden Effekt auf.

Oft ist es auch vorteilhaft, wenn sich der Rest-Aerosolkanal (63) nach der Messkammer (8) mit dem Probenausgang der Messkammer (8) vereinigt, wodurch sich der eine Teil (21-1) des Aerosols mit Feinpartikeln (21) mit den Aerosolpartikeln (3) und dem bei Normaldruck kleineren Volumenanteil des Aerosols (2) vereinigen und, gegebenenfalls über die weitere Aerosolansaugpumpe (9), aus dem Messsystem (7) befördert werden. Somit können bei Bedarf alle Partikel, d.h. alle Feinpartikel (21) und alle grösseren Aerosolpartikel (3) aus einer gemeinsamen Öffnung aus dem Messsystem (7) befördert werden.

Das Aerosol (2) mit Feinpartikeln (21) und die grösseren Aerosolpartikel (3)

Unter dem Begriff Aerosol (2) wird erfindungsgemäss ein Gemisch von Aerosolpartikeln, auch Schwebeteilchen genannt, in einem Gas oder Gasgemisch verstanden, wobei die Schwebeteilchen bei Umgebungstemperatur in fester und/oder flüssiger Form vorliegen und typischerweise einen mittleren Durchmesser von etwa 20 nm bis etwa 100 μm oder mehr aufweisen. Luft ist ein typisches Gasgemisch bei Aerosolen, die im Alltag eine Bedeutung haben und oft eine gesundheitliche Beeinträchtigung oder sogar Belastung darstellen können. Das Aerosol (2) ist das Aerosol bevor es durch den Aerosol-Partikel-Konzentrator (1) aufgetrennt wird.

Aerosole umfassen in einem definierten Gasvolumen eine Vielzahl an Aerosolpartikeln, die sich stark in deren Grösse, Form und Art unterscheiden. Somit umfasst das Aerosol (2) grössere Aerosolpartikel (3) und Feinpartikel (21), wobei die grösseren Aerosolpartikel (3) relativ zu den Feinpartikeln (21) einen grösseren mittleren Durchmesser aufweisen. Durch gezielte Anpassung der Impaktorstufen (4) kann der Fachmann einstellen, welche Partikelgrössen als grössere Aerosolpartikel (3) aufkonzentriert und in die Messkammer (8) geleitet werden, und welche Partikelgrössen als Feinpartikel (21) mit dem grösseren Teil des Aerosols (2) zumindest zum grössten Teil abgetrennt werden.

Der Aerosol-Partikel-Konzentrator (1) trennt nun das Aerosol (2) in einen grösseren Teil des Aerosols (2) mit Feinpartikeln (21) und einen kleineren Teil des Aerosols (2) mit den zu untersuchenden grösseren Aerosolpartikeln (3). Mit anderen Worten: Das Aerosol (2) wird in einen grösseren Volumenanteil, d.h. grösser als 98 Vol.-% und bevorzugt 99.5 Vol.-% oder grösser, der Gasphase des Aerosols (2) zusammen mit den Feinpartikeln (21) und einen restlichen kleineren Volumenanteil, weniger als 2 Vol.-% und bevorzugt 0.5 Vol.-% oder kleiner, der Gasphase des Aerosols (2) zusammen mit den grösseren Aerosolpartikeln (3), aufgetrennt.

Die zu untersuchenden grösseren Aerosolpartikel (3) weisen - beispielsweise in Bezug auf ihre chemische Zusammensetzung - keinerlei Einschränkungen auf. Sie können in Form eines Feststoffs, einer Flüssigkeit, einer Dispersion, einer Suspension, einer Paste, und/oder in Form von in Luft dispergierten Partikeln, insbesondere Bioaerosolpartikeln vorliegen. Dabei können die Aerosolpartikel (3) auch in Form von Agglomeraten vorliegen.

Nicht-limitierende Beispiele von geeigneten, zu untersuchenden Aerosolpartikeln (3) umfassen Pollen, insbesondere Blüten-, Gräser-, Pflanzen- und Baumpollen, Sporen wie Schimmelpilzsporen, insbesondere Aspergillus fumigatus, Alternaria alternata, Penicillium notatum und Cladosporium herbarum, Bakterien, Exkremente von Hausstaubmilben, Allergene von Haustieren, Proteine, DNA, RNA, Organismen, Rauch, insbesondere Zigarettenrauch, Brandgas und Rauchgas, Russ und Ölqualm aus Verbrennungsmotoren wie beispielsweise Autoabgase, Schwefeldioxid und/oder Asche wie Vulkanasche.

In einer bevorzugten Ausführungsform des erfindungsgemässen Messsystems (7) weisen die grösseren Aerosolpartikel (3) einen Partikeldurchmesser von mindestens 1 μm, bevorzugt mindestens 5 μm, insbesondere mindestens 10 μm, gemessen mittels Lichtbeugung nach ISO13320:2009. Dabei wird der Aerosol-Partikel-Konzentrator (1), insbesondere die virtuellen Impaktorstufen (4) des Aerosol-Partikel-Konzentrators (1), dergestalt optimiert, dass Aerosolpartikel (3), die grösser sind als der gewünschte Mindest-Partikeldurchmesser, nicht abgeschieden werden. Feinpartikel (21), d.h. die Aerosolpartikel welche eine kleinere Partikelgrösse aufweisen, werden im Aerosol-Partikel-Konzentrator (1), insbesondere durch die virtuellen Impaktorstufen (4), mit dem grösseren Teil des Aerosols (2) abgetrennt, sodass sie im Wesentlichen nicht in die Messkammer (8) geführt werden. Der Fachmann weiss wie er den Aerosol-Partikel-Konzentrator (1) sowie die virtuellen Impaktorstufen (4) verändern muss, um den gewünschten minimalen Partikeldurchmesser der grösseren Aerosolpartikel (3) optimal einzustellen. Hierzu berechnet er typischerweise die Stokes-Zahl unter Verwendung der Gleichungen (1) und (2).

Die Messkammer (8) und die Messgeräte (80)

Das erfindungsgemässe Messsystem (7) umfasst die Messkammer (8) mit mindestens einem Messgerät (80) zur qualitativen und/oder quantitativen Bestimmung der Aerosolpartikel (3), insbesondere in Echtzeit.

Das Messgerät (80) kann innerhalb und/oder ausserhalb der Messkammer (8) angeordnet sein. Ist das Messgerät (80) ausserhalb der Messkammer (8) angeordnet und basiert es auf optischen Messprinzipien, kann das Licht beispielsweise mittels geeigneter Fenster in die Messkammer (8) hinein und wieder heraus geleitet werden.

Die Messkammer (8) verbindet typischerweise den Probenausgang (43) der letzten virtuellen Impaktorstufe (4-x) mit dem Ausgang des Aerosols (2), wobei gegebenenfalls zwischen der letzten virtuellen Impaktorstufe (4-x) und der Messkammer ein Verbindungskanal (5), und/oder zwischen der Messkammer (8) und dem Aerosolausgang eine weitere Aerosolansaugpumpe (9) angeordnet sein kann.

Die Messkammer (8) des Messsystems (7) weist typischerweise eine längliche Form mit konstantem Querschnitt auf. Dabei werden die grösseren Aerosolpartikel (3) entlang der Querschnittsmitte hindurchgeführt. Während des Durchflugs werden sie mittels des Messgeräts (80) analysiert.

Die Messkammer kann überraschenderweise geringe Ausmasse aufweisen, beispielsweise $5 \times 2 \times 2$ cm$^3$, wobei grössere oder kleinere Ausmasse ebenfalls möglich sind.

Die im kleineren Teil des Aerosols (2) aufkonzentrierten grösseren Aerosol-partikel (3) werden während der Messdauer typischerweise kontinuierlich durch die Messkammer (8) geleitet, wo sie dann - typischerweise ebenfalls kontinuierlich - in der Gasphase, und bevorzugt in Echtzeit, mit dem Messgerät (80) untersucht, d.h. gemessen resp. analysiert werden.

In einer bevorzugten Ausführungsform stellt das Messgerät (80) zur Analyse der grösseren Aerosolpartikel (3) mindestens ein Messgerät i) zur Fluoreszenzmessung (81), ii) zur digitalen Holographiemessung (82), iii) zur zeitaufgelösten Streulichtmessung (83), und/oder iv) zur Raman- und/oder Infrarot- (IR-)Spektroskopie (84) dar. Werden mehrere Messgeräte (80) eingesetzt, können diese beliebig kombiniert werden. Der Fachmann weiss, welche Kombination der Messgeräte (80) er für die jeweils gewünschten Analysen benötigt.

Weisen die Aerosolpartikel (3) eine Autofluoreszenz auf - was bei vielen Aerosolpartikeln (3) der Fall ist, wie beispielsweise bei Pollen - eignet sich als Messgerät (80) ein Messgerät zur Fluoreszenzmessung (81). Dabei werden die zu untersuchenden, grösseren Aerosolpartikel (3) mittels Licht geeigneter Wellenlänge angeregt. Die Aerosolpartikel (3) absorbieren das Licht und emittieren dieses wieder teilweise. Das emittierte Licht wird anschliessend mit einem Detektor detektiert. Zur Fluoreszenzmessung eignen sich sowohl die Fluoreszenzintensität als auch die Fluoreszenzlebenszeit. Dabei kann die Fluoreszenzlebenszeit im Zeitbereich (englisch: time-domain) als auch im Frequenzbereich (englisch: frequency-domain) gemessen werden. Dem Fachmann sind die einzelnen Fluoreszenzmessmethoden bekannt und er kann sowohl die geeignete Auswahl der Methode als auch des Geräts und der einzelnen Komponenten treffen. Das Messgerät zur Fluoreszenzmessung (81) ist insbesondere hilfreich für die Messung von Bioaerosolen, wie z.B. Pollen und Sporen, Rauchgasen und für die Detektion von biologischen Kampfstoffen, wie zum Beispiel aerosolisierte gesundheitsschädliche Bakterien wie Milzbrand (Anthrax-Erreger).

Eine bevorzugte Methode für die Partikelidentifikation in Echtzeit von einzelnen Aerosolpartikeln im Flug mittels Fluoreszenzmessung (81) ist die Messung der Fluoreszenzlebenszeit im Frequenzbereich. Dabei wird das von der Lichtquelle emittierte Licht vorteilhafterweise intensitätsmoduliert. Als Detektor eignen sich insbesondere auf Halbleitertechnologie basierte elektronische Photonendetektoren. Ein besonders bevorzugter Detektor ist ein Silicon Photomultiplier (SiPM). Ein hierzu ganz besonders geeignetes Messgerät ist in der Europäischen Patentanmeldung mit Anmeldenummer EP17189312 offenbart.

Ist das Messgerät (80) ein Messgerät zur digitalen Holographiemessung (82), wird typischerweise ein optisches Setup gemäss In-Line resp. Gabor-Verfahren verwendet. Dabei wird kohärentes Licht von einer Lichtquelle - gegebenenfalls durch Linsen gebündelt - durch Fenster an der Wand der Messkammer (8) durch die Messkammer (8) zu einem gegenüberliegenden Detektor geleitet, wobei die Linsen auch als Fenster eingesetzt werden können. In der Messkammer (8) tritt das Licht auf die zu untersuchenden, vorbeifliegenden Aerosolpartikel des Aerosols, wobei ein Teil des Lichts am Aerosolpartikel (3) gebeugt wird. Dieses durch die Aerosolpartikel (3) beeinflusste Licht interferiert mit dem kohärenten Hintergrundlicht der Lichtquelle und wird gemeinsam vom gegenüberliegenden bildgebenden Detektor detektiert. Dieser liefert ein Hologramm des zu untersuchenden Aerosolpartikels (3), was zu einer zusätzlichen, bildgebenden Charakterisierung der Aerosolpartikel führt. Dabei kann die Baugruppe für digitale Holographiemessung (82) eine oder mehrere In-Line Anordnungen aufweisen. Für das Auslösen der Aufnahme des bildgebenden Detektors kann ein separater Detektor, auch Trigger-Empfänger genannt, eingesetzt werden. Ein Teil des auf die Aerosolpartikel (3) treffenden Lichts wird gestreut und kann vom Trigger-Empfänger detektiert werden. Der Fachmann kennt auch andere optische Konfigurationen für die Triggerung des Aufnahmezeitpunktes des bildgebenden Detektors. Das Messgerät zur digitalen Holographiemessung (82) ist insbesondere hilfreich zur Analyse von Aerosolpartikeln sowie biologischen Zellen im Flug. Zudem kann mittels der Hologramme von Einzelpartikeln im Flug die Strömungsgeschwindigkeit bestimmt werden.

Ist das Messgerät (80) ein Messgerät zur zeitaufgelösten Streulichtmessung (83), wird Licht einer Lichtquelle, sogenanntes Anregungslicht, mit einer Linse kollimiert, d.h. gebündelt, und durch ein Fenster parallel zur Achse der Aerosolflusses mit grösseren Aerosolpartikeln in den Messkanal geleitet, wodurch die Partikel über eine längere Strecke im Messkanal vom Anregungslichtstrahl ausgeleuchtet werden. Das Anregungslicht kann auch durch ein seitliches Fenster oder eine Linse in den Messkanal geleitet werden und ein Spiegel im Messkanal lenkt das Licht um 90° gegen oder in die Flugrichtung der Aerosolpartikel ab, wodurch die Aerosolpartikel im Vorbeiflug vom Anregungslichtstrahl ausgeleuchtet werden. Dabei entsteht Streulicht, wobei ein Teil des Streulichts durch ein weiteres Fenster in der Wand der Messkammer (8) seitlich aus der Messkammer (8) tritt. Das Fenster kann gegebenenfalls so ausgebildet sein, dass es die Funktion der Kollimations-Linse übernimmt oder das ausgetretene Streulicht wird mit einer Linse kollimiert und gegebenenfalls, d.h. falls mit einer Polarisationsmessung ergänzt, mittels Polarisationsfilter in Licht mit vertikaler und horizontaler Polarisation aufgetrennt, wobei ein polarisierter Lichtstrahl um 90° abgelenkt wird. Die beiden polarisierten Lichtstrahlen werden mit einer weiteren Linse auf je einen Empfänger fokussiert und detektiert. Dadurch werden für jede Polarisation des Lichts Streulicht-Intensitätsprofile des Partikels im Vorbeiflug gemessen, welche charakteristisch für das Aerosolpartikel sind.

Ist das Messgerät (80) ein Messgerät zur Raman- und/oder Infrarot- (IR-) Spektroskopie (84), wird die zu untersuchende Materie mit monochromatischem Licht, üblicherweise aus einem Laser, bestrahlt. Im Spektrum des an der Probe gestreuten Lichts werden neben der eingestrahlten Frequenz (Rayleigh-Streuung) noch weitere Frequenzen beobachtet. Die Frequenzunterschiede zum eingestrahlten Licht entsprechen den für das Material charakteristischen Energien von Rotations-, Schwingungs-, Phonon- oder Spin-Flip-Prozessen. Aus dem erhaltenen Spektrum lassen sich, ähnlich dem Spektrum der Infrarotspektroskopie, Rückschlüsse auf die untersuchte Substanz ziehen.

Die Methoden der digitalen Holographie, der zeitaufgelösten Streulichtmessung mit und ohne Polarisationsmessung sowie der Raman- und/oder IR-Spektroskopie sind dem Fachmann bekannt. Er kennt auch geeignete Baugruppen. Diese sind im Handel erhältlich. Er kann auch geeignete Baugruppen ohne unzumutbaren Aufwand und ohne erfinderische Tätigkeit zusammenbauen.

Das Verfahren

Das erfindungsgemässe Verfahren erlaubt überraschenderweise nur mit einem Messgerät (80) des erfindungsgemässen Messsystems (7) eine qualitative und/oder quantitative Untersuchung der aufkonzentrierten, grösseren Aerosolpartikel (3) im Flug und in Echtzeit, wobei gegebenenfalls auch mehrere Messgeräte (80) miteinander kombiniert werden können. Als Messgerät (80) wird bevorzugt ein Messgerät i) zur Fluoreszenzmessung (81), ii) zur digitalen Holographiemessung (82) iii) zur zeitaufgelösten Streulichtmessung (83), gegebenenfalls mit Polarisationsmessung, und/oder iv) zur Raman- und/oder IR-Spektroskopie (84) eingesetzt.

Das erfindungsgemässe Verfahren umfasst, dass

i) mit dem Aerosol-Partikel-Konzentrator (1) der bei Normaldruck, d.h. bei 25°C, 1 bar und 50% rel. Luftfeuchtigkeit, grössere Volumenanteil des Aerosols (2) mit den Feinpartikeln (21) über den Seitenausgang (42) der virtuellen Impaktorstufen (4, 4-1, 4-x), und gegebenenfalls mindestens einer weiteren virtuellen Impaktorstufe (4, 4-2), abgetrennt wird, wobei der Seitenausgang (42) mindestens einer weiteren (4-2) und/oder der letzten (4-x) virtuellen Impaktorstufe (4) mit dem Kreisstromkanal (64) verbunden ist,

ii) die grösseren Aerosolpartikel (3) im kleineren Teil des Aerosols (2) konzentriert und durch den Probenausgang (43) der ersten virtuellen Impaktorstufe (4, 4-1), gegebenenfalls über mindestens eine weitere virtuelle Impaktorstufe (4, 4-2), zur letzten virtuellen Impaktorstufe (4, 4-x) und anschliessend zur Messkammer (8) geführt werden, und

iii) die grösseren Aerosolpartikel (3) in der Messkammer (8) mit dem Messgerät (80) zur qualitativen und/oder quantitativen Bestimmung der Aerosolpartikel (3) in der Gasphase, und bevorzugt in Echtzeit, untersucht werden.

Das erfindungsgemässe Verfahren umfasst zudem bevorzugt, dass

- mit der Aerosolansaugpumpe (6) das Aerosol (2) über einen ersten Verbindungskanal (5-1) zur ersten virtuellen Impaktorstufe (4-1) angesaugt und dort getrennt wird in

i. ein Aerosol mit Feinpartikeln (21), welches über den Seitenausgang (42) der Impaktorstufe (4-1) via Aerosoleingang (61) zur Aerosolansaugpumpe (6) führt, und

ii. ein Aerosol mit den grösseren Aerosolpartikeln (3), welches über den Probenausgang (43) der Impaktorstufe (4-1) in einen zweiten Verbindungskanal (5-2) führt,

- ein Teil (21-1) des Aerosols mit Feinpartikeln (21) nach dem Aerosolausgang (62) der Aerosolansaugpumpe (6) im Rest-Aerosolkanal (63) abgeführt und der andere Teil (21-2) des Aerosols mit Feinpartikeln (21) im Kreisstromkanal (64) zum Aerosoleingang (61) der Aerosolansaugpumpe (6) zurückgeführt wird,

- das Aerosol mit den grösseren Aerosolpartikeln (3) im zweiten Verbindungskanal (5-2) zum Probeneingang (41) mindestens einer weiteren virtuellen Impaktorstufe (4-2) weitergeleitet wird, wobei ein Teil der Gasphase, welche ein Teil von nicht abgeschiedenen restlichen Feinpartikeln (21) enthalten kann, des weitergeleiteten Aerosols (2) über den Seitenausgang (42) der mindestens einen weiteren virtuellen Impaktorstufe (4-2) abgeführt, und das dadurch konzentriertere Aerosol mit den grösseren Aerosolpartikeln (3) durch den Probenausgang (43) der mindestens einen weiteren virtuellen Impaktorstufe (4-2) in den mindestens einen weiteren Verbindungskanal (5-3) weitergeleitet wird,

- die über den Seitenausgang (42) der mindestens einen weiteren virtuellen Impaktorstufe (4-2) abgeführten Gasphase in den Kreisstromkanal (64) eingeleitet und zusammen zum Aerosoleingang (61) der Aerosolansaugpumpe (6) zurückgeführt wird, wobei die Gasphase typischerweise die - oder zumindest ein grosser Teil der - in der ersten Impaktorstufe (4-1) nicht abgeschiedenen Feinpartikel (21) enthalten kann, und

- die konzentrierten Aerosolpartikel (3) vom Probenausgang (43) der in Aerosolfliessrichtung letzten virtuellen Impaktorstufe (4-x) durch die Messkammer (8) geleitet werden, um die Aerosolpartikel (3) mit dem Messgerät (80) zu untersuchen.

Mit dem Aerosol-Partikel-Konzentrator (1) des erfindungsgemässen Messsystems (7) und des erfindungsgemässen Verfahrens können zudem bevorzugt die grösseren Aerosolpartikel (3) des bei Normaldruck kleineren Volumenanteils des Aerosols um einen Faktor von mindestens 50, bevorzugt um einen Faktor von mindestens 200, und insbesondere - und überraschenderweise - um einen Faktor von mindestens 500 oder mehr, aufkonzentriert werden.

In einer weiteren bevorzugten Ausführungsform des erfindungsgemässen Verfahrens wird der Rest-Aerosolkanal (63) nach der Messkammer (8) dem Probenausgang der Messkammer (8) zugeführt, wodurch sich der eine Teil (21-1) des Aerosols mit Feinpartikeln (21) mit den Aerosolpartikeln (3) und dem bei Normaldruck kleineren Volumenanteil des Aerosol (2) vereinigen und gemeinsam, gegebenenfalls über die weitere Aerosolansaugpumpe (9), aus dem Messsystem (7) befördert werden. Somit können bei Bedarf alle Partikel, d.h. alle Feinpartikel (21) und alle grösseren Aerosolpartikel (3), gemeinsam durch eine Öffnung aus dem Gerät geleitet werden.

In einer anderen bevorzugten Ausführungsform des Verfahrens wird die Aerosolansaugpumpe (6) des Aerosol-Partikel-Konzentrators (1) so eingestellt, insbesondere mittels Pumpleistung der Aerosolansaugpumpe (6) und/oder mindestens eines Durchflussregulierventils im Rest-Aerosolkanal (63), dass beim Aerosoleingang (61), und somit im Wesentlichen auch beim Seitenausgang (42) der ersten virtuellen Impaktorstufe (4-1), einen Unterdruck relativ zum Aussendruck des Konzentrators (1) von 30 bis 10'000 Pa, insbesondere von 100 bis 400 Pa, erzeugt wird. Dies führt zu einem optimalen Unterdruck im Messsystem (7), um überraschenderweise einerseits möglichst keine grösseren Aerosolpartikel (3), jedoch einen genügend grossen Anteil an Feinpartikel (21) des Aerosols (2) über die Aerosolansaugpumpe (6) abzusaugen. Auch können die Aerosolpartikel (3) bei diesen Unterdrücken optimal durch die Messkammer (8) strömen. Zudem erlaubt es ein optimales Funktionieren des Kreisstromkanals (64). Dies konnte in dieser Weise nicht erwartet werden.

Die Verwendung

Das erfindungsgemässe Messsystem (7) und das erfindungsgemässe Verfahren können überraschenderweise sehr vielseitig verwendet werden. Sie eignen sich hervorragend zum Untersuchen von Aerosolen (2), insbesondere von konzentrierten grösseren Aerosolpartikel (3) der Aerosole (2), in der Gasphase und bevorzugt in Echtzeit.

Die erfindungsgemässe Verwendung eignet sich insbesondere auch wenn das Aerosol (2) ein primäres oder sekundäres Aerosol, ein Nebel, ein atmosphärisches Aerosol, ein Indoor-Aerosol, ein Industrie-Aerosol, ein technisches Aerosol, ein natürliches organisches und/oder anorganisches Aerosol darstellt, und/oder wenn die Aerosolpartikel (3) des Aerosols (2) Pollen, Sporen, Bakterien, Viren, feste oder flüssige Schwebeteilchen, Stäube wie Schwebestaub, Wüsten- und/oder Mineralstaub, und/oder Asche wie vulkanische Asche umfassen.

Die erfindungsgemässe Verwendung des erfindungsgemässen Messsystems (7) erlaubt die direkte Messung von in der Gasphase dispergierten Aerosolpartikeln, und somit von Aerosolpartikeln im Flug. Denn durch den erfindungsgemäss eingesetzten und verwendeten Aerosol-Partikel-Konzentrator (1) können die Aerosolpartikel (3) stark konzentriert werden, was eine äusserst effektive Messung derselben im Flug und in Echtzeit ermöglicht. Durch die geeignete Auswahl mindestens eines Messgeräts (80) kann die optimalste Messmethode ausgewählt werden, um die Aerosolpartikel (3) zu analysieren.

Es werden folgende Bezugszeichen verwendet:

1    Mehrstufiger Aerosol-Partikel-Konzentrator
2    Aerosol
    21 Feinpartikel des Aerosols (2)
    21-1 ein Teil des Aerosols mit Feinpartikeln

21-2 anderer Teil des Aerosols mit Feinpartikeln

3 Grössere Aerosolpartikel
4 Virtuelle Impaktorstufen
4-1 erste virtuelle Impaktorstufe
4-2 weitere virtuelle Impaktorstufe
4-x letzte virtuelle Impaktorstufe
41 Probeneingang der virtuellen Impaktorstufe (4)
42 Seitenausgang der virtuellen Impaktorstufe (4)
43 Probenausgang der virtuellen Impaktorstufe (4)

5 Verbindungskanal
5-1 erster Verbindungskanal
5-2 zweiter Verbindungskanal
5-3 weiterer Verbindungskanal

6 Aerosolansaugpumpe
60 Radialventilator
61 Aerosoleingang der Aerosolansaugpumpe (6)
62 Aerosolausgang der Aerosolansaugpumpe (6)
63 Rest-Aerosolkanal
64 Kreisstromkanal
65 Statische Druckverteilanordnung
65a Wandungen mit einer Vielzahl an Öffnungen
65b Wandungen ohne Öffnungen
65c Öffnungen zum Kreisstromkanal (64)
66 Luftpumpe der Druckverteilanordnung (65)
66a Ansaugöffnung der Luftpumpe (66) in der Druckverteilplatte (65)
66b Aerosolrückführeinlass von Luftpumpe (66)

7 Messsystem
71 Messsystemeingang
72 Messsystemausgang

8 Messkammer
80 Messgerät zur qualitativen und/oder quantitativen Bestimmung der Aerosolpartikel (3) in Echtzeit
81 Gerät zur Fluoreszenzmessung
82 Gerät für die digitale Holographiemessung
83 Gerät zur zeitaufgelösten Streulichtmessung
84 Gerät zur Raman- und/oder IR-Spektroskopie

9 weitere Aerosolansaugpumpe (9)

Im Folgenden werden nicht-limitierende, bevorzugte Ausführungsformen des erfindungsgemässen Messsystems (7) mit mehrstufigem Aerosol-Partikel-Konzentrator (1) und Messkammer (8) anhand der nachfolgenden Zeichnungen beschrieben. Diese sind nicht einschränkend auszulegen und werden als Bestandteil der Beschreibung verstanden:

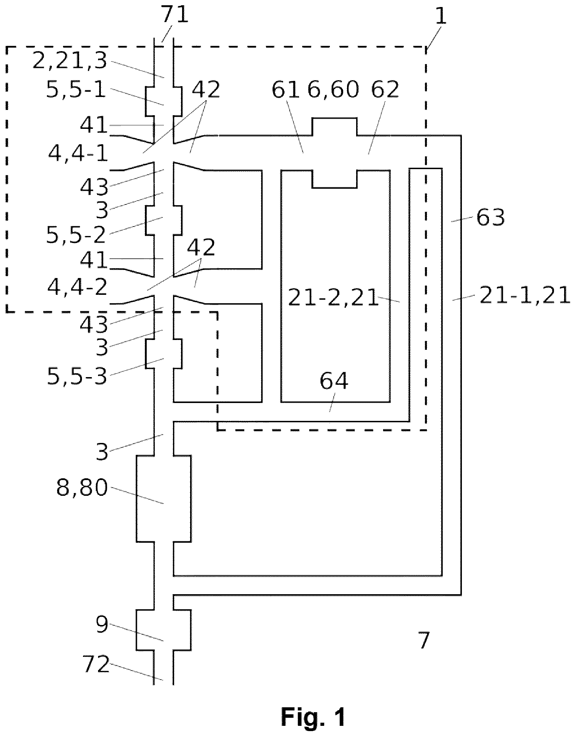

Fig. 1    zeigt beispielhaft und schematisch einen Teil des erfindungsgemässen Messsystems (7) mit Messsystemeingang (71) und Messsystemausgang (72) umfassend den mehrstufigen AerosolPartikel-Konzentrator (1; gestrichelt dargestellt) mit Aerosolansaugpumpe (6) und Kreisstromkanal (64), sowie der Messkammer (8). Das Messsystem (7) mit Kreisstromkanal (64) ist vorteilhafterweise zylinderförmig, wobei sich die virtuellen Impaktorstufen (4, 4-1, 4-2, 4-x), die Verbindungskanäle (5, 5-1, 5-2, 5-3) sowie die Messkammer (8) in Serie und vorteilhafterweise linear in der Mitte der zylindrischen Anordnung befinden. Somit zeigt die Aerosolansaugpumpe (6), der Kreisstromkanal (64) und der Rest-Aerosolkanal (63) einen Schnitt von innen nach aussen der einen Seite des Messsystems (7). Dabei werden die Bereiche, die in der Darstellung beispielsweise vom Kreisstromkanal (64) und vom Rest-Aerosolkanal (63) vollständig umschlossen sind, punktuell von feinen Verbindungselementen gehalten (nicht dargestellt), um dem Messsystem (7) mit Kreisstromkanal (64) die notwendige Stabilität zu geben.

Die Aerosolansaugpumpe (6) kann in Form eines Radialventilators (60) oder einer anderen Pumpe sein. Sie erzeugt im Messsystem (7) einen Unterdruck, wodurch das Aerosol (2) über einen ersten Verbindungskanal (5, 5-1) zum Probeneingang (41) der ersten virtuellen Impaktorstufe (4-1) angesaugt wird. Dort wird der grössere Teil des Aerosols (2) mit Feinpartikeln (21) über den Seitenausgang (42) der virtuellen Impaktorstufe (4) abgetrennt und somit die grösseren Aerosolpartikel (3) im kleineren Teil des Aerosols (2) konzentriert. Die grösseren Aerosolpartikel (3) und der kleinere Teil des Aerosols (2) strömen durch den Probenausgang (43) der virtuellen Impaktorstufe (4-1), welcher in der Regel gegenüber dem Probeneingang (41) angeordnet ist. Vom Probenausgang (43) der ersten virtuellen Impaktorstufe (4-1) gelangen die Aerosolpartikel (3) mit dem kleineren Teil des Aerosols (2) zum zweiten Verbindungskanal (5, 5-2), welcher den Probenausgang (43) der ersten virtuellen Impaktorstufe (4-1) mit dem Probeneingang (41) der zweiten, d.h. einer weiteren, virtuellen Impaktorstufe (4-2) verbindet. Diese, wie auch jede weitere, trennt - analog der ersten Impaktorstufe (4-1)den grösseren Anteil, d.h. mindestens 73 Vol.-%, bevorzugt 83 Vol.% oder mehr, der verbliebenen Gasphase des kleineren Teils des Aerosols (2) über den Seitenausgang (42) ab. Wurden bei der vorherigen Impaktorstufe (4) nicht alle Feinpartikel (21) abgetrennt, werden letztere - oder zumindest der grösste Teil - ebenfalls über den Seitenausgang (42) abgetrennt.

Umfasst das Messgerät (7) weitere virtuelle Impaktorstufen (4-2, 4-x), werden diese vorteilhafterweise in gleicher Art und Weise in Serie angeordnet.

Der über den Seitenausgang (42) der ersten virtuellen Impaktorstufe (4-1) abgetrennte grössere Teil des Aerosols (2) mit Feinpartikeln (21) gelangt über den Aerosoleingang (61) zur Aerosolansaugpumpe (6) und weiter zum Aerosolausgang (62). Von dort wird ein Teil (21-1) des Aerosols mit Feinpartikeln (21) im Rest-Aerosolkanal (63) abgeführt und beispielhaft nach der Messkammer (8) mit dem Verbindungskanal vereint, welcher die Messkammer (8) mit der dargestellten, optionalen weiteren Aerosolansaugpumpe (9) verbindet. Dadurch weist das Messsystem (7) lediglich einen Probenausgang auf. Dies ist insbesondere dann von Vorteil, wenn die grösseren Aerosolpartikel (3) und/oder die Feinpartikel (21) vor dem Probenausgang herausgefiltert werden.

Nach dem Aerosolausgang (62) wird der andere Teil (21-2) des Aerosols mit Feinpartikeln (21) im Kreisstromkanal (64) zum Aerosoleingang (61) der Aerosolansaugpumpe (6) zurückgeführt. Der Seitenausgang (42) der mindestens einen weiteren virtuellen Impaktorstufe (4-2) ist mit dem Kreisstromkanal (64) verbunden und führt einen Teil der Gasphase ab, welche gegebenenfalls Feinpartikel (21) enthalten kann. Durch den von der Aerosolansaugpumpe (6) generierten Unterdruck entsteht ebenfalls ein Unterdruck im Kreisstromkanal (64), durch welchen die über den Seitenausgang (42) der weiteren Impaktorstufe (4-2) abgeführte Gasphase und gegebenenfalls die darin dispergierten Feinpartikel (21) angesogen, mit dem im Kreisstromkanal (64) befindlichen anderen Teil (21-2) des Aerosols mit Feinpartikeln (21) vereint und gemeinsam zum Aerosoleingang (61) der Aerosolansaugpumpe (6) zurückgeführt werden.

In Fig. 1 wird zudem beispielhaft und optional ein Teil des Kreisstromkanals (64) abgezweigt und nach dem weiteren Verbindungskanal (5, 5-3) nach dem Probenausgang (43) der in Aerosolfliessrichtung zweiten, und somit beispielhaft letzten, virtuellen Impaktorstufe (4-2, 4-x) als Mantelstrom zugeführt. Der Mantelstrom führt zu einer weiteren Bündelung der grösseren Aerosolpartikel (3) in der Mitte der Messkammer (8), was zu einer noch besseren Messung von praktisch allen Aerosolpartikeln (3) führt. Dagegen weisen die Feinpartikel (21), die vom Kreisstrom des Kreisstromkanals (64) als Mantelstrom hinzugefügt werden, für die Messung keinen negativen, störenden Effekt auf.

Auch wird beispielhaft und optional der Rest-Aerosolkanal (63) nach der Messkammer (8) mit dem Probenausgang (43) vereinigt. Dadurch wird der im Rest-Aerosolkanal (63) geführte eine Teil (21-1) des Aerosols mit Feinpartikeln (21) mit den Aerosolpartikeln (3) und dem bei Normaldruck kleineren Volumenanteil des Aerosol (2) nach der Messkammer (8) vereinigt und gemeinsam, gegebenenfalls über die weitere Aerosolansaugpumpe (9), aus Messsystem (7) befördert. Somit kann dem abzuführenden Aerosol alle Partikel entzogen werden, wodurch das in die Umgebung hinausströmende Gas keine Partikel mehr enthält.

Der Volumenstrom des einen Teils des Aerosols mit Feinpartikeln (21) kann zudem mit geeigneten Strömungsmessern gemessen und der Durchfluss reguliert werden. Dadurch kann auch der Volumenstrom des Kreisstroms im Kreisstromkanal (64) reguliert werden.

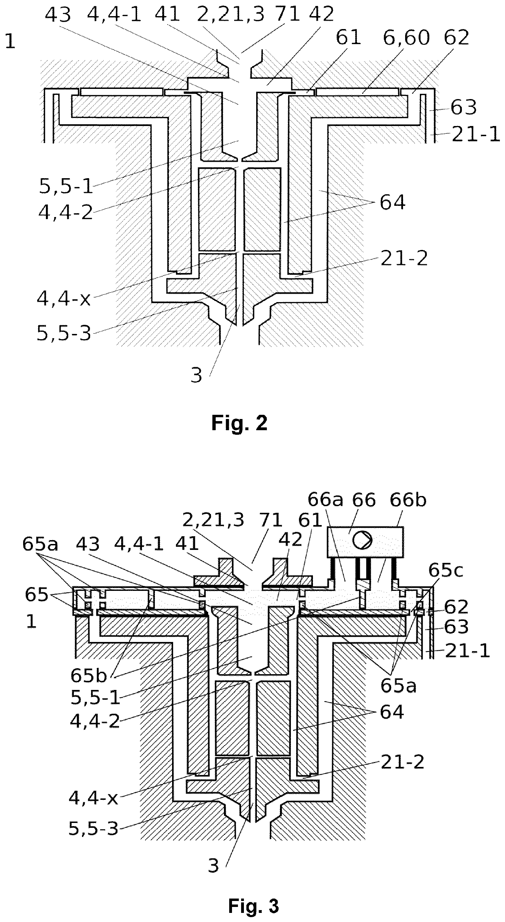

Fig. 2     zeigt beispielhaft einen Querschnitt des mechanischen Aufbaus einer Ausführungsform des mehrstufigen Aerosol-PartikelKonzentrators (1) mit Messsystemeingang (71) und Kreisstromkanal (64) mit insgesamt drei virtuellen Impaktorstufen (4, 4-1, 4-2, 4-x). Der Aerosol-Partikel-Konzentrators (1) weist eine Aerosolansaugpumpe (6) in Form eines Radialventilators (60) auf. Ein Teil des Aerosols mit Feinpartikeln (21-1) wird durch den Rest-Aerosolkanal (63) abgeführt. Der Kreisstromkanal (64) enthält einen Teil des Aerosols mit Feinpartikeln (21-2), Ein Teil des Aerosols mit Feinpartikeln (21-2) bildet den Mantelstrom, welcher vor der Messkammer (8) zum kleineren Teil des Aerosols (2) mit den grösseren Aerosolpartikeln (3) hinzugefügt wird.

Der Teil des Aerosols mit Feinpartikeln (21-2), welcher nicht in den Mantelstrom führt (21-2), wird nach der Abzweigung des Mantelstroms und den virtuellen Impaktorstufen (4, 4-1, 4-2, 4-x) zum Aerosoleingang (61) der Aerosolansaugpumpe (6) geführt. Dabei sind die Seitenausgänge (42) der weiteren und der letzten virtuellen Impaktorstufen (4-2, 4-x) mit dem Kreisstromkanal (64) verbunden, wodurch der bei den Impaktorstufen (4-2, 4-x) abgetrennte Teil der Gasphase des Aerosols mit gegebenenfalls Feinpartikeln (21) in den Kreisstromkanal (64) mündet und von dort zum Aerosoleingang (61) der Aerosolansaugpumpe (6) geführt wird. Schraffierte Bereiche, die in der Darstellung beispielsweise von virtuellen Impaktorstufen (4), Seitenausgängen (42), Verbindungskanal (5), Rest-Aerosolkanal (63) und/oder Kreisstromkanal (64) vollständig umschlossen sind, sind punktuell mit feinen Verbindungselementen mit der gegenüberliegenden Wand gehalten (nicht dargestellt), um dem mehrstufigen Aerosol-Partikel-Konzentrators (6) mit Kreisstromkanal (64) die notwendige Stabilität zu geben. Ein Teil des Kreisstromkanals (64) wird beispielhaft abgezweigt und nach der letzten virtuellen Impaktorstufe (4, 4-x) und nach dem weiteren Verbindungskanal (5, 5-3) als Mantelstrom dem Aerosol mit den grösseren Aerosolpartikel (3) zugeführt.

Fig. 3 zeigt analog Fig. 2 einen Querschnitt des mechanischen Aufbaus des mehrstufigen Aerosol-Partikel-Konzentrators (1) mit Messsystemeingang (71) und Kreisstromkanal (64) mit insgesamt drei virtuellen Impaktorstufen (4, 4-1, 4-2, 4-x), wobei die Aerosolansaugpumpe (6) in Form einer statischen Druckverteilanordnung (65) mit Luftansaugpumpe (66; nicht dargestellt) ausgebildet ist.

Die statische Druckverteilanordnung (65) weist beispielhaft Wandungen mit einer Vielzahl an Öffnungen (65a), Wandungen ohne Öffnung (65b) sowie Öffnungen (65c) zum Kreisstromkanal (64), mindestens eine Ansaugöffnung (66a) der Luftpumpe (66), mindestens einen Aerosolrückführeinlass (66b) der Luftpumpe (66) und mindestens einen Aerosolausgang (62) der Druckverteilanordnung (65), d.h. der Aerosolansaugpumpe (6), auf.

Das Aerosol (2) mit den Feinpartikeln (21; nicht dargestellt) wird aufgrund der Sogwirkung der Luftpumpe (66) in der ersten virtuellen Impaktorstufe (4-1) um 90° umgelenkt und durch den Seitenausgang (42) der virtuellen Impaktorstufe (4-1) in den Aerosoleingang (61) und somit in den ersten Bereich (grau dargestellt) der Druckverteilanordnung (65) gesogen und von dort wieder - mittels Gasaustrittsdruck - durch den Aerosolrückführeinlass (66b) in den zweiten Bereich (weisser, äusserer Bereich der Druckverteilanordnung (65)) gepresst. Von dort gelangt ein Teil des Aerosols mit Feinpartikeln (21-1) durch den Aerosolausgang (62) in den Rest-Aerosolkanal (63). Der andere Teil des Aerosols mit Feinpartikeln (21-2) gelangt über die mindestens eine Öffnung (65c) in den Kreisstromkanal (64) und von dort wieder zurück zum Aerosoleingang (61). Ein Teil des Kreisstromkanals (64) wird beispielhaft abgezweigt und nach der letzten virtuellen Impaktorstufe (4, 4-x) und nach dem weiteren Verbindungskanal (5, 5-3) als Mantelstrom dem Aerosol mit den grösseren Aerosolpartikel (3) zugeführt.

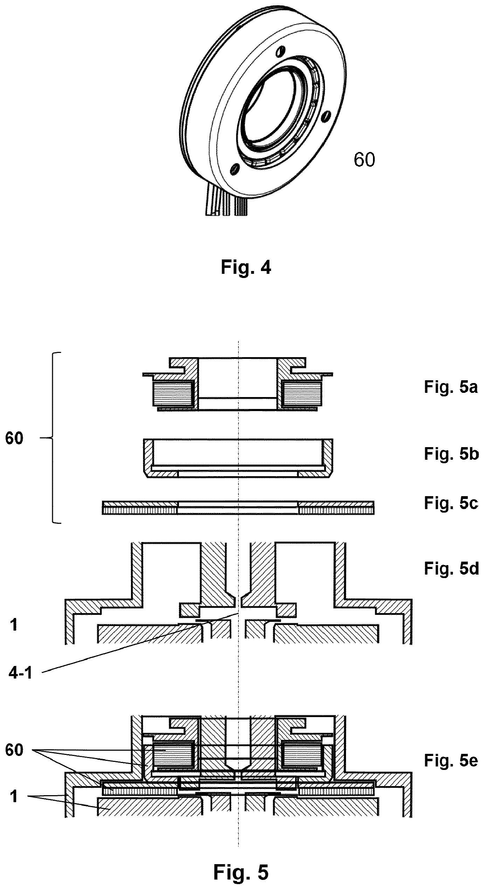

Fig. 4 zeigt beispielhaft einen Radialventilator (60) mit axialem Durchlass in Form eines Aussenläufermotors mit Hohlwelle.

Fig. 5 zeigt beispielhaft den Einbau des Radialventilators (60) in den mehrstufigen Aerosol-Partikel-Konzentrator (1) im Bereich der ersten virtuellen Impaktorstufe (4-1).

Fig. 5a zeigt den Querschnitt des Stators des Radialventilators (60).

Fig. 5b zeigt den Querschnitt des Rotors des Radialventilators (60).

Fig. 5c zeigt den Querschnitt des Turbinenrads des Radialventilators (60), welches auf den Rotor des Aussenläufermotors montiert wird.

Fig. 5d zeigt den Querschnitt des mehrstufigen Aerosol-Partikel-Konzentrators (1) im Bereich der ersten virtuellen Impaktorstufe (4-1), in welche der Radialventilator (60) eingebaut wird.

Fig. 5e zeigt den Querschnitt des im Bereich der ersten virtuellen Impaktorstufe (4-1) des mehrstufigen Aerosol-Partikel-Konzentrators (1) eingebauten Radialventilators (60) mit Stator, Rotor und Turbinenrad.

Fig 6: zeigt beispielhaft eine statische Druckverteilanordnung (65) durch welche der grössere Teil des Aerosols (2) mit Feinpartikeln (21; nicht dargestellt), welche durch den Messsystemeingang (71) in das Messsystem (7, nicht dargestellt) gelangen, strömen kann.

Die Druckverteilanordnung (65) bildet zusammen mit der Luftpumpe (66; nicht dargestellt) die Aerosolansaugpumpe (6; nicht dargestellt) und weist in der Mitte einen Aerosoleingang (61) und einen daran angrenzenden ersten Bereich (grau dargestellt) auf. In diesem ersten Bereich befindet sich die Ansaugöffnung der Luftpumpe (66) sowie Wandungen mit einer Vielzahl an Öffnungen (65a). Diese dienen als Vorrichtung um den durch die Luftpumpe (66) generierten Unterdruck im ersten Bereich möglichst gleichmässig zu verteilen. Der von der Luftansaugpumpe (66) angesaugte eine Teil des Aerosols (2) mit Feinpartikeln (21) wird durch den Aerosolrückführeinlass (66b) in einen zweiten Bereich geführt, welcher vom ersten Bereich durch eine Wandung ohne Öffnung (65b) getrennt ist. Dieser zweite Bereich umfasst mindestens einen Aerosolausgang (62), durch welche das Aerosol (2) zusammen mit den Feinpartikeln (21) zum Rest-Aerosolkanal (63) geführt wird, sowie eine Vielzahl von, Öffnung (65c) zum Kreisstromkanal (64). Dabei sind vorteilhafterweise der Aerosolrückführeinlass (66b), der Aerosolausgang (62) sowie die mindestens eine Öffnung (65c) mit mindestens einer Vorrichtung voneinander getrennt, um die durch die verschiedenen Ein-/Auslässe des Aerosols (2) mit Feinpartikeln (21) entstehenden Druckunterschiede optimal zu verteilen. Die Druckverteilanordnung (65) ist zudem gegen aussen vorteilhafterweise ebenfalls mit einer Wandung (65b) ohne Öffnungen begrenzt.

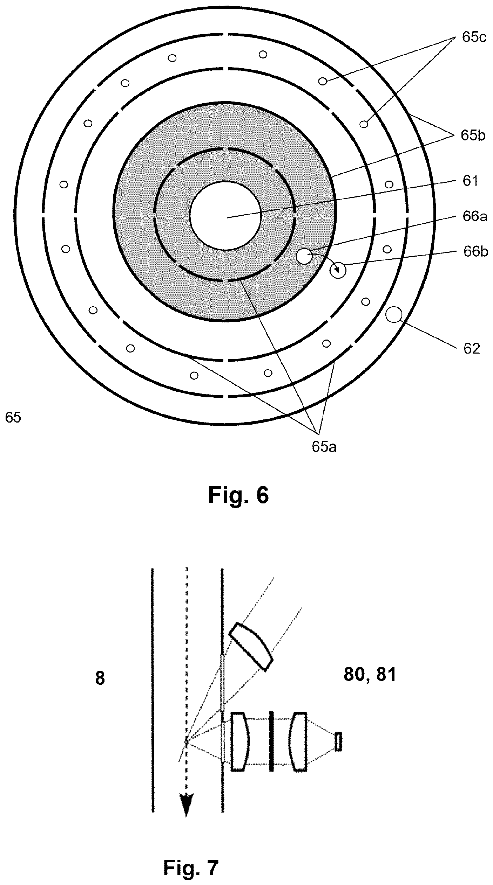

Fig. 7 zeigt die Messkammer (8) mit einem beispielhaft dargestellten Gerät zur Fluoreszenzmessung (81) als Messgerät (80) zur qualitativen und/oder quantitativen Bestimmung der Aerosolpartikel (3; nicht dargestellt) in Echtzeit und im Flug. Der Pfeil zeigt die Flugrichtung der Aerosolpartikel (3) an. Wird ein Mantelstrom verwendet, zentrieren sich die grösseren, zu untersuchenden Aerosolpartikel (3) in der Mitte der Messkammer, was eine effizientere und genauere Messung aller Aerosolpartikel (3) ermöglicht. Die Feinpartikel (21; nicht dargestellt) im Mantelstrom beeinträchtigen die Messresultate nicht oder nur unwesentlich.

Das Anregungslicht des Geräts zur Fluoreszenzmessung (81) kommt von einer Lichtquelle von rechts oben (nicht dargestellt) und wird mit einer Linse durch ein Fenster in der Messkammerwand in der Messkammer (8) auf die Flugbahn der Aerosolpartikel (3) fokussiert. Das Aerosolpartikel (3) absorbiert das Licht und emittiert einen Teil davon, d.h. das Fluoreszenzlicht, wieder. Letzteres tritt durch das untere rechte Fenster aus und wird mit Hilfe von zwei Linsen gesammelt und auf den Empfänger gelenkt, welcher rechts unten ausserhalb der Messkammer (8) dargestellt ist. Zwischen den zwei Linsen ist beispielhaft ein optischer Filter angebracht.

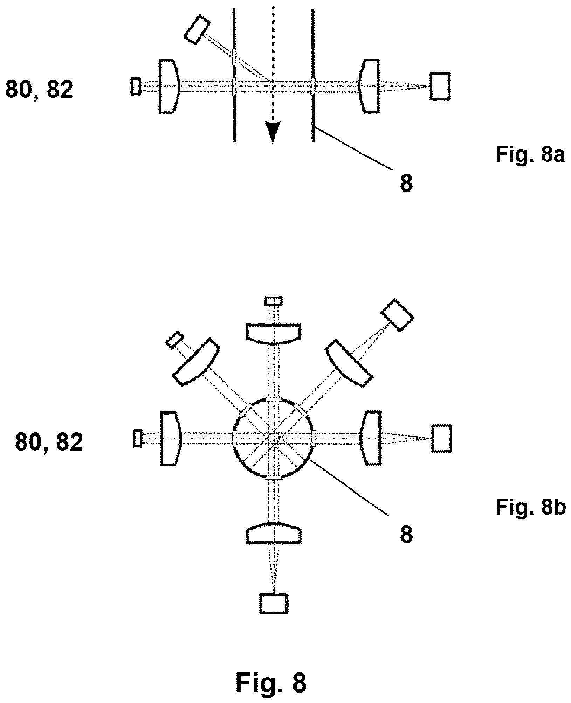

Fig. 8 zeigt die Messkammer (8) mit einem beispielhaft dargestellten Gerät zur digitalen Holographiemessung (82) als Messgerät (80) zur qualitativen und/oder quantitativen Bestimmung der Aerosolpartikel (3) in Echtzeit und im Flug.

Fig. 8a zeigt das optische Setup zur Holographiemessung (82) von der Seite, wobei der Pfeil die Flugrichtung der zu untersuchenden Partikel anzeigt. Die dargestellte Anordnung wird auch als In-Line oder Gabor Verfahren bezeichnet.

Das linke rechteckige Element stellt die Lichtquelle dar. Das emittierte kohärente Licht wird durch eine Linse kollimiert, d.h. gebündelt. Der Lichtstrahl tritt anschliessend durch ein Fenster in der Messkanalwand in den Messkanal (8) ein. Das durch das Aerosolpartikel (3; nicht dargestellt) gebeugte Licht interferiert mit dem Licht der Lichtquelle und tritt auf der Gegenseite durch ein Fenster aus dem Messkanal aus und wird mit einer weiteren Linse auf den bildgebenden Empfänger geleitet. Zudem wird vom Aerosolpartikel ausgesendetes Streulicht vom Trigger-Empfänger, welcher oben links angeordnet ist, empfangen. Der Trigger-Empfänger löst die resultierende Holographieaufnahme aus, wobei das aufgenommene Bild ein digitales Bild darstellt, d.h. es handelt sich um digitale Holographie.

Fig. 8b zeigt einen Querschnitt durch die kreisförmig dargestellte Messkammer (8) und durch das Messgerät (80). Dargestellt ist ein Setup mit zwei In-Line Anordnungen zur digitalen Holographiemessung (82), wobei die Anordnungen in Flugrichtung der Aerosolpartikel (3; nicht dargestellt) versetzt angeordnet sein können, wodurch zusätzlich die Geschwindigkeit der Aerosolpartikel (3) im Flug gemessen werden kann. Der Winkel zwischen zwei Setups beträgt beispielhaft 90°, wobei er auch einen anderen Winkel im Bereich von grösser 1° bis kleiner 180° aufweisen kann. Zwischen den beiden bildgebenden Empfängern ist ein Trigger-Empfänger angeordnet, welcher Licht von den beiden Lichtquellen, welches an den Aerosolpartikeln (3) gestreut wurde, empfängt. Der Winkel zwischen dem Holographiesetup und dem Triggersetup kann beliebig gewählt werden.

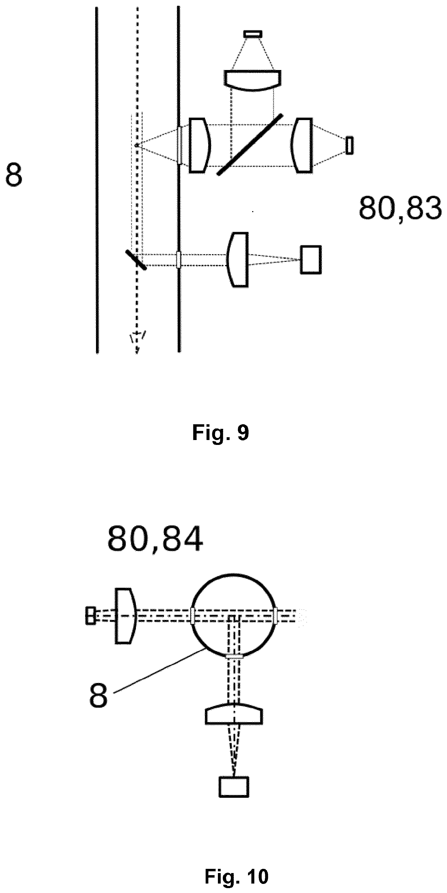

Fig. 9 zeigt die Messkammer (8) mit einem beispielhaft dargestellten Gerät zur zeitaufgelösten Streulichtmessung (83), inkl. Polarisationsmessung als Messgerät (80) zur qualitativen und/oder quantitativen Bestimmung der Aerosolpartikel (3; nicht dargestellt) in Echtzeit und im Flug.

Die Anregungslichtquelle unten rechts erzeugt das Anregungslicht, welches mittels einer Linse kollimiert und durch ein Fenster in den Messkanal geleitet wird. Ein Spiegel lenkt das Licht beispielhaft 90° nach oben ab, wodurch das Anregungslicht die Aerosolpartikel (3) gegen deren Flugbahn ausleuchtet. Somit werden die Aerosolpartikel (3) im Vorbeiflug beleuchtet, wodurch Streulicht entsteht. Ein Teil des entstandenen Streulichts wird über das obere Fenster in der Wand der Messkammer (8) geleitet und mittels einer Linse kollimiert und beispielhaft auf einen Polarisationsfilter gelenkt, welcher das Licht filtert und in Licht mit vertikaler und in Licht mit horizontaler Polarisation trennt. Der eine Teil des Lichts wird 90° abgelenkt, der anders polarisierte Teil des Lichts geht in gleicher Richtung, wie das einfallende Licht weiter. Beide verschieden polarisierte Lichtstrahlen werden mit einer weiteren Linse auf einen jeweils separaten Empfänger fokussiert und detektiert.

Fig. 10   zeigt schematisch einen Querschnitt durch die kreisförmig dargestellte Messkammer (8) und durch das Messgerät (80), wobei das Messgerät (80) eine Anordnung zur Raman- und/oder Infrarot(IR-) Spektroskopie (84) darstellt. Dabei wird ein Laserstrahl ausgehend von einer Laserquelle (ganz links) anhand einer Linse (zwischen Laserquelle und Messkammer (8) angeordnet) kollimiert und durch ein Fenster in die Messkammer (8) des Messsystems (1) geleitet. Auf der gegenüberliegenden Seite der Messkammer (8) tritt der nicht angeregte Teil des Lasers wieder aus der Messkammer (8) aus. In der Mitte der Messkammer (8) tritt ein Teil des Laserstrahls auf die grösseren Aerosolpartikel (3; nicht dargestellt), wobei diese durch den Laserstrahl angeregt werden. Dies wiederum führt zur Emission von Licht mit unterschiedlicher Wellenlänge in alle Richtungen. Ein Teil des emittierten Lichts gelangt durch ein weiteres Fenster (beispielhaft in einem 90°-Winkel in Bezug auf den emittierten Laser dargestellt) aus der Messkammer (8) aus, wo er mittels einer weiteren Linse gebündelt und zum Detektor des Spektrometers der Raman- und/oder IR-Spektroskopie (84) weitergeleitet und anschliessend analysiert wird.

## Patentansprüche

1. Messsystem (7) mit Messsystemeingang (71) und Messsystemausgang (72) zum Untersuchen von konzentrierten, grösseren Aerosolpartikeln (3) eines Aerosols (2) in der Gasphase umfassend einen mehrstufigen Aerosol-Partikel-Konzentrator (1) zum Abtrennen von Feinpartikeln (21) und eines Teils der Gasphase des Aerosols (2), sowie eine Messkammer (8) zur Analyse der grösseren Aerosolpartikel (3), wobei

   i) die Messkammer (8) mindestens ein Messgerät (80) zur qualitativen und/oder quantitativen Bestimmung der Aerosol-partikel (3), insbesondere in Echtzeit, umfasst, und

   ii) der Aerosol-Partikel-Konzentrator (1) eine erste (4-1) und mindestens eine letzte (4-x) virtuelle Impaktorstufe (4) mit je einem Probeneingang (41), Seitenausgang (42) und Probenausgang (43) umfasst, wobei die virtuellen Impaktorstufen (4) einen grösseren Teil des Aerosols (2) mit Feinpartikeln (21) abtrennen und die grösseren Aerosolpartikel (3) im kleineren Teil des Aerosols (2) konzentrieren, wobei der Aerosol-Partikel-Konzentrator (1)

   - eine Aerosolansaugpumpe (6) mit Aerosoleingang (61) und Aerosolausgang (62) umfasst zum Erzeugen eines Unterdrucks in virtuellen Impaktorstufen (4), wobei der Seitenausgang (42) der ersten virtuellen Impaktorstufe (4-1) mit dem Aerosoleingang (61) der Aerosolansaugpumpe (6) verbunden ist, **dadurch gekennzeichnet, dass** der Aerosol-Partikel-Konzentrator (1)
   - einen Kreisstromkanal (64) umfasst, in welchem ein Teil des abgetrennten Aerosols mit Feinpartikeln (21) im Kreisstrom vom Aerosolausgang (62) zum Aerosoleingang (61) der Aerosolansaugpumpe (6) zurückgeführt wird, wobei der Seitenausgang (42) der letzten (4-x) virtuellen Impaktorstufe (4) mit dem Kreisstromkanal (64) verbunden ist.

2. Messsystem (7) nach Anspruch 1, **dadurch gekennzeichnet, dass**

   i) die Aerosolansaugpumpe (6) einen Radialventilator (60) oder eine statische Druckverteilanordnung (65) mit Luftpumpe (66) darstellt, wobei in der Mitte des Radialventilators (60) oder in der Mitte der statischen Druckverteilanordnung (65) eine Aerosolansaugöffnung, angeordnet ist, und/oder

   ii) das Messsystem (1) eine weitere Aerosolansaugpumpe (9) umfasst, die zwischen der Messkammer (8) und dem Messsystemausgang (72) angeordnet ist.

3. Messsystem (7) nach Anspruch 1 oder 2, **dadurch gekennzeichnet, dass** die grösseren Aerosolpartikel (3) einen Partikeldurchmesser von mindestens 1 $\mu$m, bevorzugt mindestens 5 $\mu$m, insbesondere mindestens 10 $\mu$m, gemes-

sen mittels Lichtbeugung nach ISO13320:2009, aufweisen.

4. Messsystem (7) nach mindestens einem der Ansprüche 1 bis 3, **dadurch gekennzeichnet, dass** das Messgerät (80) zur Analyse der grösseren Aerosolpartikel (3) mindestens ein Messgerät i) zur Fluoreszenzmessung (81), ii) zur digitalen Holographiemessung (82), iii) zur zeitaufgelösten Streulichtmessung (83) und/oder iv) zur Raman- und/oder Infrarot-Spektroskopie (84) darstellt.

5. Messsystem (7) nach mindestens einem der Ansprüche 1 bis 4, **dadurch gekennzeichnet, dass** der Aerosol-Partikel-Konzentrator (1) mindestens zwei virtuelle Impaktorstufen (4) mit je einem Probeneingang (41), Seitenausgang (42) und Probenausgang (43), sowie mindestens drei durch die Impaktorstufen (4) voneinander getrennte Verbindungskanäle (5) aufweist.

6. Messsystem (7) nach Anspruch 5, **dadurch gekennzeichnet, dass** der Aerosolausgang (62) der Aerosolansaugpumpe (6) sowohl a) mit einem Rest-Aerosolkanal (63), welcher einen Teil (21-1) des angesaugten Aerosols mit Aerosol-Feinpartikeln (21) abführt, als auch mit b) einem Kreisstromkanal (64) verbunden ist, wobei im Kreisstromkanal (64) der andere Teil (21-2) des angesaugten Aerosols mit Aerosol-Feinpartikeln (21) im Kreisstrom zum Aerosoleingang (61) der Aerosolansaugpumpe (6) zurückgeführt wird.

7. Messsystem (7) nach mindestens einem der Ansprüche 1 bis 6, **dadurch gekennzeichnet, dass** die virtuellen Impaktorstufen (4) folgende Bedingungen erfüllen:

$$(St)^{1/2} \geq 0.4 \qquad\qquad (1)$$

wobei

$$St = (d_p^2 * C * u_j * \rho_p) / (9 * l * \mu) \qquad (2)$$

und

St = Stokes-Zahl [-],
$d_p$ = Cutoff-Durchmesser der zu konzentrierenden Aerosolpartikel (3) [m],
C = Cunningham-Faktor [-]
$u_j$ = mittlere Strahlgeschwindigkeit [m/s]
$\rho_p$ = Dichte der Partikel [kg/m$^3$]
l = Düsendurchmesser [m] des Probeneingangs
$\mu$ = dynamische Fluidviskosität [Pa*s].

8. Messsystem (7) nach mindestens einem der Ansprüche 1 bis 7, **dadurch gekennzeichnet, dass** nach dem Probenausgang (43) der in Aerosolfliessrichtung letzten virtuellen Impaktorstufe (4-x) ein Mantelstrom zugeführt wird, wobei der Mantelstrom i) einen vom Kreisstromkanal (64) abgezweigten Teil, oder ii) den Rest-Aerosolkanal (63), oder einen Teil davon, darstellt.

9. Verfahren zum Untersuchen von konzentrierten, grösseren Aerosolpartikeln (3) eines Aerosols (2) mit dem Messsystem (7) nach mindestens einem der Ansprüche 1 bis 8, **dadurch gekennzeichnet, dass**

i) mit dem Aerosol-Partikel-Konzentrator (1) der bei Normaldruck grössere Volumenanteil des Aerosols (2) mit den Feinpartikeln (21) über den Seitenausgang (42) der virtuellen Impaktorstufen (4, 4-1, 4-x), und gegebenenfalls mindestens einer weiteren virtuellen Impaktorstufe (4, 4-2), abgetrennt wird, wobei der Seitenausgang (42) der letzten (4-x), und, sofern vorhanden, der mindestens einer weiteren (4-2) virtuellen Impaktorstufe (4) mit dem Kreisstromkanal (64) verbunden ist,
ii) die grösseren Aerosolpartikel (3) im kleineren Teil des Aerosols (2) konzentriert und durch den Probenausgang (43) der ersten virtuellen Impaktorstufe (4, 4-1), gegebenenfalls über mindestens eine weitere virtuelle Impaktorstufe (4-2), zur letzten virtuellen Impaktorstufe (4-x) und anschliessend zur Messkammer (8) geführt werden, und
iii) die grösseren Aerosolpartikel (3) in der Messkammer (8) mit dem Messgerät (80) zur qualitativen und/oder quantitativen Bestimmung der Aerosolpartikel (3) in der Gasphase, und bevorzugt in Echtzeit, untersucht werden.

10. Verfahren nach Anspruch 9, **dadurch gekennzeichnet, dass**

- mit der Aerosolansaugpumpe (6) das Aerosol (2) über einen ersten Verbindungskanal (5-1) zur ersten virtuellen Impaktorstufe (4-1) angesaugt und dort getrennt wird in

    i. ein Aerosol mit Feinpartikeln (21), welches über den Seitenausgang (42) der Impaktorstufe (4-1) via Aerosoleingang (61) zur Aerosolansaugpumpe (6) führt, und
    ii. ein Aerosol mit den grösseren Aerosolpartikeln (3), welches über den Probenausgang (43) der Impaktorstufe (4-1) in einen zweiten Verbindungskanal (5-2) führt,

- ein Teil (21-1) des Aerosols mit Feinpartikeln (21) nach dem Aerosolausgang (62) der Aerosolansaugpumpe (6) im Rest-Aerosolkanal (63) abgeführt und der andere Teil (21-2) des Aerosols mit Feinpartikeln (21) im Kreisstromkanal (64) zum Aerosoleingang (61) der Aerosolansaugpumpe (6) zurückgeführt wird,
- das Aerosol mit den grösseren Aerosolpartikeln (3) im zweiten Verbindungskanal (5-2) zum Probeneingang (41) mindestens einer weiteren virtuellen Impaktorstufe (4-2) weitergeleitet wird, wobei ein Teil der Gasphase des weitergeleiteten Aerosols (2) über den Seitenausgang (42) der mindestens einen weiteren virtuellen Impaktorstufe (4-2) abgeführt, und das dadurch konzentriertere Aerosol mit den grösseren Aerosolpartikeln (3) durch den Probenausgang (43) der mindestens einen weiteren virtuellen Impaktorstufe (4-2) in den mindestens einen weiteren Verbindungskanal (5-3) weitergeleitet wird,
- die über den Seitenausgang (42) der mindestens einen weiteren virtuellen Impaktorstufe (4-2) abgeführte Gasphase in den Kreisstromkanal (64) eingeleitet und zusammen zum Aerosoleingang (61) der Aerosolansaugpumpe (6) zurückgeführt wird, und
- die konzentrierten Aerosolpartikel (3) vom Probenausgang (43) der in Aerosolfliessrichtung letzten virtuellen Impaktorstufe (4-x) durch die Messkammer (8) geleitet werden, um die Aerosolpartikel (3) mit dem Messgerät (80) zu untersuchen.

11. Verfahren nach Anspruch 9 oder 10, **dadurch gekennzeichnet, dass** mit dem Aerosol-Partikel-Konzentrator (1) die grösseren Aerosolpartikel (3) im bei Normaldruck kleineren Volumenanteil des Aerosols um einen Faktor von mindestens 50, bevorzugt um einen Faktor von mindestens 200, und insbesondere um einen Faktor von mindestens 500, aufkonzentriert werden.

12. Verfahren nach mindestens einem der Ansprüche 9 bis 11, **dadurch gekennzeichnet, dass** der Rest-Aerosolkanal (63) nach der Messkammer (8) dem Probenausgang der Messkammer (8) zugeführt wird, wodurch sich der eine Teil (21-1) des Aerosols mit Feinpartikeln (21) mit den Aerosolpartikeln (3) und dem bei Normaldruck kleineren Volumenanteil des Aerosols (2) vereinigt und gegebenenfalls über eine weitere Aerosolansaugpumpe (9), aus dem Messsystem (7) befördert wird.

13. Verfahren nach mindestens einem der Ansprüche 9 bis 12, **dadurch gekennzeichnet, dass** die Aerosolansaugpumpe (6) des Aerosol-Partikel-Konzentrators (1) so eingestellt wird, insbesondere mittels Pumpleistung und/oder Durchflussregulierventilen im Rest-Aerosolkanal (63), dass beim Aerosoleingang (61), und somit im Wesentlichen auch beim Seitenausgang (42) der ersten virtuellen Impaktorstufe (4-1), einen Unterdruck relativ zum Aussendruck des Konzentrators (1) von 30 bis 10'000 Pa, insbesondere von 100 bis 400 Pa, erzeugt wird.

14. Verwendung des Messsystems (7) nach mindestens einem der Ansprüche 1 bis 8 und des Verfahrens nach mindestens einem der Ansprüche 9 bis 13 zum Untersuchen von Aerosolen (2), insbesondere von konzentrierten grösseren Aerosolpartikeln (3) der Aerosole (2), in der Gasphase und bevorzugt in Echtzeit.

15. Verwendung nach Anspruch 14, **dadurch gekennzeichnet, dass** das Aerosol (2) ein primäres oder sekundäres Aerosol, ein Nebel, ein atmosphärisches Aerosol, ein Indoor-Aerosol, ein Industrie-Aerosol, ein technisches Aerosol, ein natürliches organisches und/oder anorganisches Aerosol darstellt, und/oder die Aerosolpartikel (3) des Aerosols (2) Pollen, Sporen, Bakterien, Viren, feste oder flüssige Schwebeteilchen, Stäube wie Schwebestaub, Wüsten- und/oder Mineralstaub, und/oder Asche wie vulkanische Asche umfassen.

**Claims**

1.  A measuring system (7) with a measuring system inlet (71) and a measuring system outlet (72) for investigating concentrated, larger aerosol particles (3) of an aerosol (2) in the gas phase, comprising a multi-stage aerosol particle concentrator (1) for separating fine particles (21) and a portion of the gas phase of the aerosol (2), as well as a measuring chamber (8) for analysing the larger aerosol particles (3), wherein:

    i) the measuring chamber (8) comprises at least one measuring instrument (80) for the qualitative and/or quantitative determination of the aerosol particles (3), in particular in real time, and
    ii) the aerosol particle concentrator (1) comprises a first (4-1) and at least one last (4-x) virtual impactor stage (4) each with a sample inlet (41), side outlet (42) and sample outlet (43), wherein the virtual impactor stages (4) separate a larger portion of the aerosol (2) with fine particles (21) and concentrate the larger aerosol particles (3) in the smaller portion of the aerosol (2), wherein the aerosol particle concentrator (1)

    - comprises an aerosol suction pump (6) with an aerosol inlet (61) and aerosol outlet (62) for generating a negative pressure in the virtual impactor stages (4), wherein the side outlet (42) of the first virtual impactor stage (4-1) is connected to the aerosol inlet (61) of the aerosol suction pump (6), **characterized in that** the aerosol particle concentrator (1) comprises
    - a circulating flow channel (64) in which a portion of the separated aerosol with fine particles (21) is returned in the circulating flow from the aerosol outlet (62) to the aerosol inlet (61) of the aerosol suction pump (6), wherein the side outlet (42) of the last (4-x) virtual impactor stage (4) is connected to the circulating flow channel (64).

2.  The measuring system (7) as claimed in claim 1, **characterized in that**

    i) the aerosol suction pump (6) is a radial fan (60) or a static pressure distribution assembly (65) with air pump (66), wherein an aerosol intake opening is disposed in the centre of the radial fan (60) or in the centre of the static pressure distribution assembly (65), and/or
    ii) the measuring system (1) comprises a further aerosol suction pump (9) which is disposed between the measuring chamber (8) and the measuring system outlet (72).

3.  The measuring system (7) as claimed in claim 1 or claim 2, **characterized in that** the larger aerosol particles (3) have a particle diameter of at least 1 $\mu$m, preferably at least 5 um, in particular at least 10 $\mu$m, measured by means of light diffraction in accordance with ISO 13320:2009.

4.  The measuring system (7) as claimed in at least one of claims 1 to 3, **characterized in that** the measuring instrument (80) for analysing the larger aerosol particles (3) is constituted by at least one measuring instrument i) for fluorescence measurement (81), ii) for digital holography measurement (82), iii) for time-resolved scattered light measurement (83) and/or iv) for Raman and/or infrared spectroscopy (84).

5.  The measuring system (7) as claimed in at least one of claims 1 to 4, **characterized in that** the aerosol particle concentrator (1) comprises at least two virtual impactor stages (4) each with a sample inlet (41), side outlet (42) and sample outlet (43) as well as at least three connecting channels (5) separated from one another by the impactor stages (4).

6.  The measuring system (7) as claimed in claim 5, **characterized in that** the aerosol outlet (62) of the aerosol suction pump (6) is connected to both a) a residual aerosol channel (63), which removes a portion (21-1) of the aspirated aerosol with fine aerosol particles (21) and also to b) a circulating flow channel (64) wherein, in the circulating flow channel (64), the other portion (21-2) of the aspirated aerosol with fine aerosol particles (21) is returned to the aerosol inlet (61) of the aerosol suction pump (6) in the circulating flow.

7.  The measuring system (7) as claimed in at least one of claims 1 to 6, **characterized in that** the virtual impactor stages (4) satisfy the following conditions:

$$(\text{St})^{1/2} \geq 0.4 \qquad\qquad (1)$$

wherein

$$St= (d_\rho{}^2 * C * u_j * \rho_\rho) / (9 * l * \mu) \qquad (2)$$

and

St= stokes number [-],
$d_\rho$ = cut-off diameter of the aerosol particles (3) to be concentrated [m],
C = Cunningham factor [-]
$u_j$ = mean jet speed [m/s]
$\rho_\rho$ = density of the particles [kg/m3]
l = nozzle diameter [m] of the sample inlet
$\mu$ = dynamic fluid viscosity [Pa*s].

8. The measuring system (7) as claimed in at least one of claims 1 to 7, **characterized in that** a by-pass flow is provided after the sample outlet (43) of the last virtual impactor stage (4-x) in the aerosol flow direction, wherein the by-pass flow i) forms a portion which is branched off from the circulating flow channel (64), or ii) forms the residual aerosol channel (63) or a portion thereof.

9. A method for investigating concentrated larger aerosol particles (3) of an aerosol (2) with the measuring system (7) as claimed in at least one of claims 1 to 8, **characterized in that**

i) the larger volume fraction at normal pressure of the aerosol (2) with the fine particles (21) is separated by means of the aerosol particle concentrator (1) via the side outlet (42) of the virtual impactor stages (4, 4-1, 4-x) and at least one further virtual impactor stage (4, 4-2) where applicable, wherein the side outlet (42) of the last (4-x) and, if present, of the at least one further (4-2) virtual impactor stage (4) is connected to the circulating flow channel (64),
ii) the larger aerosol particles (3) are concentrated in the smaller portion of the aerosol (2) and are guided through the sample outlet (43) of the first virtual impactor stage (4, 4-1), if applicable via at least one further virtual impactor stage (4-2), to the last virtual impactor stage (4-x) and then to the measuring chamber (8), and
iii) the larger aerosol particles (3) in the measuring chamber (8) are investigated using the measuring instrument (80) for the qualitative and/or quantitative determination of the aerosol particles (3) in the gas phase, and preferably in real time.

10. The method as claimed in claim 9, **characterized in that**

- with the aerosol suction pump (6), the aerosol (2) is drawn in via a first connecting channel (5-1) to the first virtual impactor stage (4-1) and is separated there into

i. an aerosol with fine particles (21), which is conveyed to the aerosol suction pump (6) by means of the side outlet (42) of the impactor stage (4-1) via the aerosol inlet (61), and
ii. an aerosol with the larger aerosol particles (3), which is conveyed into a second connecting channel (5-2) by means of the sample outlet (43) of the impactor stage (4-1),

- a portion (21-1) of the aerosol with fine particles (21) is discharged after the aerosol outlet (62) of the aerosol suction pump (6) in the residual aerosol channel (63) and the other portion (21-2) of the aerosol with fine particles (21) in the circulating flow channel (64) is returned to the aerosol inlet (61) of the aerosol suction pump (6),
- the aerosol with the larger aerosol particles (3) in the second connecting channel (5-2) is relayed to the sample inlet (41) of at least one further virtual impactor stage (4-2), wherein a portion of the gas phase of the relayed aerosol (2) is discharged via the side outlet (42) of the at least one further virtual impactor stage (4-2) and the aerosol with the larger aerosol particles (3) which is concentrated thereby is relayed through the sample outlet (43) of the at least one further virtual impactor stage (4-2) into the at least one further connecting channel (5-3),
- the gas phase discharged via the side outlet (42) of the at least one further virtual impactor stage (4-2) is introduced into the circulating flow channel (64) and returned together to the aerosol inlet (61) of the aerosol suction pump (6), and
- the concentrated aerosol particles (3) are conveyed from the sample outlet (43) of the last virtual impactor stage (4-x) in the aerosol flow direction through the measuring chamber (8) in order to investigate the aerosol particles (3) with the measuring instrument (80).

**11.** The method as claimed in claim 9 or claim 10, **characterized in that** the larger aerosol particles (3) in the smaller volume fraction of the aerosol at normal pressure are concentrated with the aerosol particle concentrator (1) by a factor of at least 50, preferably by a factor of at least 200, and in particular by a factor of at least 500.

**12.** The method as claimed in at least one of claims 9 to 11, **characterized in that** the residual aerosol channel (63) after the measuring chamber (8) is brought to the sample outlet of the measuring chamber (8), whereupon the one portion (21-1) of the aerosol with fine particles (21) is combined with the aerosol particles (3) and the smaller volume fraction at normal pressure of the aerosol (2) and if applicable is conveyed out of the measuring system (7) by means of a further aerosol suction pump (9).

**13.** The method as claimed in at least one of claims 9 to 12, **characterized in that** the aerosol suction pump (6) of the aerosol particle concentrator (1) is adjusted, in particular by means of pump power and/or flow regulating valves in the residual aerosol channel (63), in a manner such that at the aerosol inlet (61) and therefore substantially also at the side outlet (42) of the first virtual impactor stage (4-1), a negative pressure relative to the external pressure of the concentrator (1) of 30 to 10000 Pa, in particular of 100 to 400 Pa, is generated.

**14.** Use of the measuring system (7) as claimed in at least one of claims 1 to 8 and of the method as claimed in at least one of claims 9 to 13 for the investigation of aerosols (2), in particular of concentrated larger aerosol particles (3) of the aerosols (2), in the gas phase and preferably in real time.

**15.** Use as claimed in claim 14, **characterized in that** the aerosol (2) is a primary or secondary aerosol, a mist, an atmospheric aerosol, an indoor aerosol, an industrial aerosol, a technical aerosol, a natural organic and/or inorganic aerosol and/or the aerosol particles (3) of the aerosol (2) comprise pollen, spores, bacteria, viruses, solid or liquid suspended particles, dust such as suspended dust, desert dust and/or mineral dust and/or ash such as volcanic ash.

**Revendications**

**1.** Système de mesure (7), pourvu d'une entrée (71) de système de mesure et d'une sortie (72) de système de mesure, destiné à analyser les plus grandes particules d'aérosol (3) concentrées d'un aérosol (2) dans la phase gazeuse, comprenant un concentrateur (1) de particules d'aérosol à plusieurs étages, pour la séparation de particules fines (21) et d'une partie de la phase gazeuse de l'aérosol (2), ainsi qu'une chambre de mesure (8), pour l'analyse des plus grandes particules d'aérosol (3),

    i) la chambre de mesure (8) comprenant au moins un instrument de mesure (80), pour la détermination qualitative et / ou quantitative des particules d'aérosol (3), notamment en temps réel, et
    ii) le concentrateur (1) de particules d'aérosol comprenant un premier (4-1) et au moins un dernier (4-x) étage d'impacteur (4) virtuel, pourvus chacun d'une entrée d'échantillons (41), d'une sortie latérale (42) et d'une sortie d'échantillons (43), les étages d'impacteur (4) virtuels séparant une assez grande partie de l'aérosol (2) avec des particules fines (21) et les plus grandes particules d'aérosol se concentrant dans la plus petite partie de l'aérosol (2), le concentrateur de particules (1) d'aérosol

        - comprenant une pompe d'aspiration (6) de l'aérosol, pourvue d'une entrée d'aérosol (61) et d'une sortie d'aérosol (62), pour générer une dépression dans des étages d'impacteur (4) virtuels, la sortie latérale (42) du premier étage d'impacteur (4-1) virtuel étant reliée avec l'entrée d'aérosol (61) de la pompe d'aspiration (6) de l'aérosol, **caractérisé en ce que** le concentrateur (1) de particules d'aérosol
        - comprend une canalisation (64) de flux circulant, dans laquelle une partie séparée de l'aérosol avec particules fines (21) est ramenée de la sortie d'aérosol (62) vers l'entrée d'aérosol (61) de la pompe d'aspiration (6) de l'aérosol, la sortie latérale (42) du dernier (4-x) étage d'impacteur (4) virtuel étant reliée avec la canalisation (64) de flux circulant.

**2.** Système de mesure (7) selon la revendication 1, **caractérisé**

    i) **en ce que** la pompe d'aspiration (6) de l'aérosol constitue un ventilateur (60) radial ou un ensemble distributeur de pression (65) statique pourvu d'une pompe à air (66), au centre du ventilateur (60) radial ou au centre de l'ensemble distributeur de pression (65) statique étant prévu un orifice d'aspiration de l'aérosol, et / ou
    ii) **en ce que** le système de mesure (1) comprend une autre pompe d'aspiration (9) de l'aérosol, qui est placée entre la chambre de mesure (8) et la sortie (72) du système de mesure.

3. Système de mesure (7) selon la revendication 1 ou 2, **caractérisé en ce que** les plus grandes particules d'aérosol (3) présentent un diamètre des particules d'au moins 1 $\mu$m, de préférence, d'au moins 5 $\mu$m, notamment d'au moins 10 $\mu$m, mesuré par diffraction de la lumière selon la norme ISO13320 : 2009.

4. Système de mesure (7) selon au moins l'une quelconque des revendications 1 à 3, **caractérisé en ce que**, pour l'analyse des plus grandes particules d'aérosol (3), l'instrument de mesure (80) constitue au moins un instrument de mesure i) pour la mesure de fluorescence (81), ii), pour la mesure holographique (82) numérique, pour la mesure de la lumière diffuse (83) résolue dans le temps et / ou iv) pour la spectroscopie Raman et / ou pour la spectroscopie à infrarouge (84).

5. Système de mesure (7) selon au moins l'une quelconque des revendications 1 à 4, **caractérisé en ce que** le concentrateur (1) de particules d'aérosol comporte au moins deux étages d'impacteur (4) virtuels, pourvus chacun d'une entrée d'échantillons (41), d'une sortie latérale (42) et d'une sortie d'échantillons (43), ainsi que d'au moins trois canalisations de liaison (5), séparées les unes des autres par les étages d'impacteur (4).

6. Système de mesure (7) selon la revendication 5, **caractérisé en ce que** la sortie d'aérosol (62) de la pompe d'aspiration (6) de l'aérosol a) est reliée aussi bien a) avec une canalisation d'aérosol (63) résiduel, laquelle évacue une partie (21-1) de l'aérosol aspiré avec des particules fines (21) d'aérosol, qu'également b) avec une canalisation (64) de flux circulant, dans la canalisation (64) de flux circulant, l'autre partie (21-2) de l'aérosol aspiré avec des particules fines (21) d'aérosol étant recyclée dans le flux circulant vers l'entrée d'aérosol (61) de la pompe d'aspiration (6) de l'aérosol.

7. Système de mesure (7) selon au moins l'une quelconque des revendications 1 à 6, **caractérisé en ce que** les étages d'impacteur (4) virtuels satisfont aux conditions suivantes :

$$(St)^{1/2} \geq 0.4 \qquad\qquad (1)$$

sachant que

$$St= (d_\rho{}^2*C*u_j*\rho_\rho) \ / \ (9*l*\mu) \qquad (2)$$

et

St= nombre de Stokes [-],
$d_\rho$ = diamètre de coupe des particules d'aérosol à concentrer (3) [m],
C = coefficient de Cunningham [-]
$u_j$ = vitesse moyenne des jets [m/s]
$\rho_\rho$ = densité des particules [kg/m$^3$]
l = diamètre des buses [m] de l'entrée d'échantillons
$\mu$ = viscosité dynamique du fluide [Pa*s].

8. Système de mesure (7) selon au moins l'une quelconque des revendications 1 à 7, caractérisé qu'après la sortie d'échantillons (43), un flux d'enveloppe est alimenté vers le dernier étage d'impacteur (4-x) dans la direction de circulation de l'aérosol, le flux d'enveloppe i) constituant une partie dérivée de la canalisation (64) de flux circulant, ou ii) la canalisation d'aérosol (63) résiduel, ou une partie de celle-ci.

9. Procédé, destiné à examiner les plus grandes particules d'aérosol (3) concentrées d'un aérosol (2) à l'aide du système de mesure (7) selon au moins l'une quelconque des revendications 1 à 8, **caractérisé**

i) **en ce qu'**avec le concentrateur (1) de particules d'aérosol, la fraction volumique la plus grande de l'aérosol (2) à pression normale avec les particules fines (21) est séparée par l'intermédiaire de la sortie latérale (42) des étages d'impacteur (4, 4-1, 4-x) virtuels, et le cas échéant, par l'intermédiaire d'au moins un autre étage d'impacteur (4, 4-2) virtuel, la sortie latérale (42) du dernier (4-x), et s'il est présent de l'au moins, un autre (4-2) étage d'impacteur (4) virtuel étant relié avec la canalisation (64) de flux circulant,
ii) **en ce que** les plus grandes particules d'aérosol (3) sont concentrées dans la plus petite partie de l'aérosol (2) et sont guidées à travers la sortie d'échantillons (43) du premier étage d'impacteur (4, 4-1), et le cas échéant, par l'intermédiaire d'au moins un autre étage d'impacteur (4-2) virtuel, vers le dernier étage d'impacteur (4-x) virtuel et ensuite vers la chambre de mesure (8), et

iii) **en ce que** les plus grandes particules d'aérosol (3) sont examinées dans la chambre de mesure (8) avec l'instrument de mesure (80), pour la détermination qualitative et / ou quantitative des particules d'aérosol (3) dans la phase gazeuse, et de préférence en temps réel.

10. Procédé selon la revendication 9, **caractérisé**

- **en ce qu'**avec la pompe d'aspiration (6) de l'aérosol, l'aérosol (2) est aspiré par l'intermédiaire d'une première canalisation de liaison (5-1) vers le premier étage d'impacteur (4-1) virtuel et y est séparé en

i. un aérosol avec des particules fines (21), lequel est guidé par l'intermédiaire de la sortie latérale (42) de l'étage d'impacteur (4-1) via l'entrée d'aérosol (61) vers la pompe d'aspiration (6) de l'aérosol, et
ii. un aérosol avec les plus grandes particules d'aérosol (3), lequel est guidé par l'intermédiaire de la sortie d'échantillons (43) de l'étage d'impacteur (4-1) vers une deuxième canalisation de liaison (5-2),

- **en ce qu'**une partie (21-1) de l'aérosol avec des particules fines (21) est évacuée après la sortie d'aérosol (62) de la pompe d'aspiration (6) de l'aérosol dans la canalisation d'aérosol (63) résiduel et l'autre partie (21-2) de l'aérosol avec des particules fines (21) est recyclée dans la canalisation (64) de flux circulant vers l'entrée d'aérosol (61) de la pompe d'aspiration (6) de l'aérosol,
- **en ce que** l'aérosol avec les plus grandes particules d'aérosol (3) est retransféré dans la deuxième canalisation de liaison (5-2) vers l'entrée d'échantillon (41) d'au moins un autre étage d'impacteur (4-2) virtuel, une partie de la phase gazeuse de l'aérosol (2) retransférée étant évacuée par l'intermédiaire de la sortie latérale (42) de l'au moins un autre étage d'impacteur (4-2) virtuel, et l'aérosol ainsi concentré avec les plus grandes particules d'aérosol (3) étant retransféré à travers la sortie d'échantillons (43) de l'au moins un autre étage d'impacteur (4-2) virtuel dans l'au moins une autre canalisation de liaison (5-3),
- **en ce que** la phase gazeuse évacuée par l'intermédiaire de la sortie latérale (42) de l'au moins un autre étage d'impacteur (4-2) virtuel est introduite dans la canalisation (64) de flux circulant et est recyclée ensemble vers l'entrée d'aérosol (61) de la pompe d'aspiration (6) de l'aérosol, et
- **en ce que** les particules d'aérosol (3) concentrées sont dirigées de la sortie d'échantillons (43) du dernier étage d'impacteur (4-x) virtuel dans la direction de circulation de l'aérosol à travers la chambre de mesure (8), pour examiner les particules d'aérosol (3) avec l'instrument de mesure (80).

11. Procédé selon la revendication 9 ou 10, **caractérisé en ce qu'**avec le concentrateur (1) de particules d'aérosol (3), les plus grandes particules d'aérosol sont concentrées dans la plus petite fraction volumique de l'aérosol à pression normale d'un coefficient d'au moins 50, de préférence d'un coefficient d'au moins 200, et notamment d'un coefficient d'au moins 500.

12. Procédé selon au moins l'une quelconque des revendications 9 à 11, **caractérisé en ce qu'**après la chambre de mesure (8), la canalisation d'aérosol (63) résiduel est amenée vers la sortie d'échantillons de la chambre de mesure (8), suite à quoi, l'une partie (21-1) de l'aérosol avec des particules fines (21) est réunie avec les particules d'aérosol (3) et la plus petite fraction volumique de l'aérosol (2) à pression normale et transportée le cas échéant par l'intermédiaire d'une autre pompe d'aspiration (9) de l'aérosol, hors du système de mesure (7)

13. Procédé selon au moins l'une quelconque des revendications 9 à 12, **caractérisé en ce que** la pompe d'aspiration (6) de l'aérosol du concentrateur (1) de particules d'aérosol est réglée, notamment par puissance de pompage et / ou par des vannes régulatrices de débit dans la canalisation d'aérosol (63) résiduel, de telle sorte, qu'à l'entrée d'aérosol (61), et ainsi, sensiblement aussi à la sortie latérale (42) du premier étage d'impacteur (4-1) virtuel, soit générée une dépression par rapport à la pression extérieure du concentrateur (1) de 30 à 10'000 Pa, notamment de 100 à 400 Pa.

14. Utilisation du système de mesure (7) selon au moins l'une quelconque des revendications 1 à 8 et du procédé selon au moins l'une quelconque des revendications 9 à 13 pour examiner des aérosols (2), notamment les plus grandes particules d'aérosol (3) concentrées des aérosols (2), dans la phase gazeuse et de préférence en temps réel.

15. Utilisation selon la revendication 14, **caractérisée en ce que** l'aérosol (2) constitue un aérosol primaire ou secondaire, un brouillard, un aérosol atmosphérique, un aérosol d'intérieur, un aérosol industriel, un aérosol technique, un aérosol organique et / ou inorganique naturel, et / ou **en ce que** les particules d'aérosol (3) de l'aérosol (2) comprennent du pollen, des spores, des bactéries, des virus, des particules en suspension solides ou liquides, des poussières, comme la poussière en suspension, la poussière du désert et / ou la poussière minérale, et / ou de la cendre, comme la cendre volcanique.

**Fig. 1**

43  4,4-1  41  2,21,3  71  42    61    6,60  62

1

5,5-1
4,4-2

4,4-x

5,5-3

3

61

6,60  62

63
21-1

64

21-2

**Fig. 2**

66a  66  66b

2,21,3  71  61
42

65a  43  4,4-1  41

65

1

65b
5,5-1
4,4-2

4,4-x

5,5-3

3

65c

62
63
21-1

65a

64

21-2

**Fig. 3**

**Fig. 4**

**Fig. 5a**

**Fig. 5b**

**Fig. 5c**

**Fig. 5d**

**Fig. 5e**

**Fig. 5**

65c

65b

61

66a

66b

62

65

65a

**Fig. 6**

8

80, 81

**Fig. 7**

**80, 82**

Fig. 8a

8

**80, 82**

Fig. 8b

8

# Fig. 8

8

80,83

**Fig. 9**

80,84

8

**Fig. 10**

**IN DER BESCHREIBUNG AUFGEFÜHRTE DOKUMENTE**

**In der Beschreibung aufgeführte Patentdokumente**

- EP 1109005 A
- EP 2679985 A
- US 4968885 A
- US 20110203931 A
- EP 17189312 A